# EUROPEAN PATENT APPLICATION

(11) **EP 4 583 062 A1**
(43) Date of publication of application: **09.07.2025**
(21) Application number: 23860188.4
(22) Date of filing: 24.08.2023
(51) Int. Cl.: G06T 19/00

(54) **VIRTUAL SPACE CONTROL METHOD, VIRTUAL SPACE CONTROL DEVICE, AND VIRTUAL SPACE CONTROL SYSTEM**

(30) Priority: 31.08.2022 US 202263402695 P
(71) Applicant: Panasonic Intellectual Property Corporation of America, Torrance, CA 90504 (US)
(72) Inventor: IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP); NONOSHITA, Airi, Kadoma-shi, Osaka 571-0057 (JP)
(74) Representative: Grünecker Patent- und Rechtsanwälte PartG mbB
(86) International application number: PCT/JP2023/030608
(87) International publication number: WO 2024/048425

(57) **Abstract**

A virtual space control method includes: obtaining first item information on a first item to be displayed in a first virtual space (S701); and generating, based on the first item information, second item information on a second item to be displayed in a second virtual space different from the first virtual space (S702).

## Description

### [Technical Field]

The present disclosure relates to a virtual space control method, and so on.

### [Background Art]

Patent Literature (PTL) 1 discloses a method for displaying a single character in a plurality of virtual spaces.

### [Citation List]

### [Patent Literature]

[PTL 1] Japanese Unexamined Patent Application Publication (Translation of PCT Application) No. 2011-522631

### [Summary of Invention]

### [Technical Problem]

However, in a situation where a plurality of administrators provide a plurality of virtual spaces, for example, the data format of a first virtual space and the data format of a second virtual space may be different, and thus data that is usable in the first virtual space may be unusable in the second virtual space. Therefore, there are cases where transferring of a character object between a plurality of virtual spaces is difficult.

In view of this, the present disclosure provides a virtual space control method that is capable of appropriately controlling the transferring of an item between a plurality of virtual spaces.

### [Solution to Problem]

A virtual space control method according to one aspect among a plurality of aspects included in the present disclosure includes: obtaining first item information on a first item to be displayed in a first virtual space; and generating, based on the first item information, second item information on a second item to be displayed in a second virtual space different from the first virtual space.

It should be noted that these general and specific aspects may be implemented as a system, an integrated circuit, a computer program, or a non-transitory computer-readable recording medium such as an optical disc, or may be implemented as any combination of a system, a method, an integrated circuit, a computer program, and a recording medium.

### [Advantageous Effects of Invention]

Each of the aspects explicitly or implicitly shown in the present disclosure can contribute to any one or more of, for example, improving security in a service provided via a virtual space, improving ease of system construction, improving flexibility in system changing, improving ease of system providing start up, reducing the processing amount in a server or terminal, or reducing cost in a server or terminal.

In particular, the aspect exemplified in the above-described Solution to Problem may contribute to appropriately controlling the transferring of an item between a plurality of virtual spaces.

### [Brief Description of Drawings]

[FIG. 1]

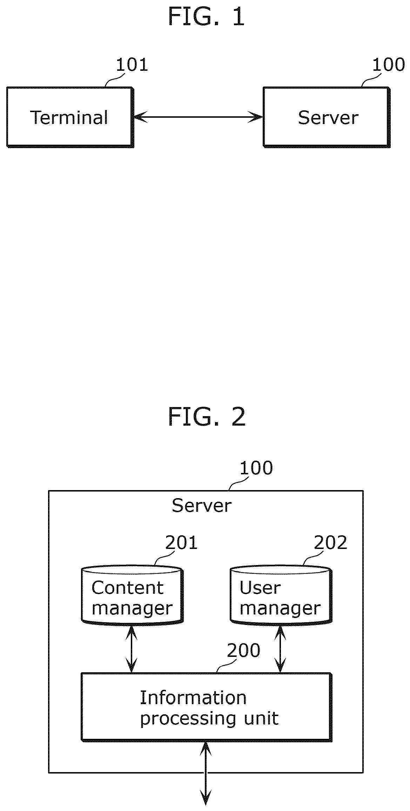

   FIG. 1 is a block diagram illustrating a configuration example of a virtual space system according to an embodiment.
[FIG. 2]
   FIG. 2 is a block diagram illustrating a first configuration example of a server according to the embodiment.
[FIG. 3]

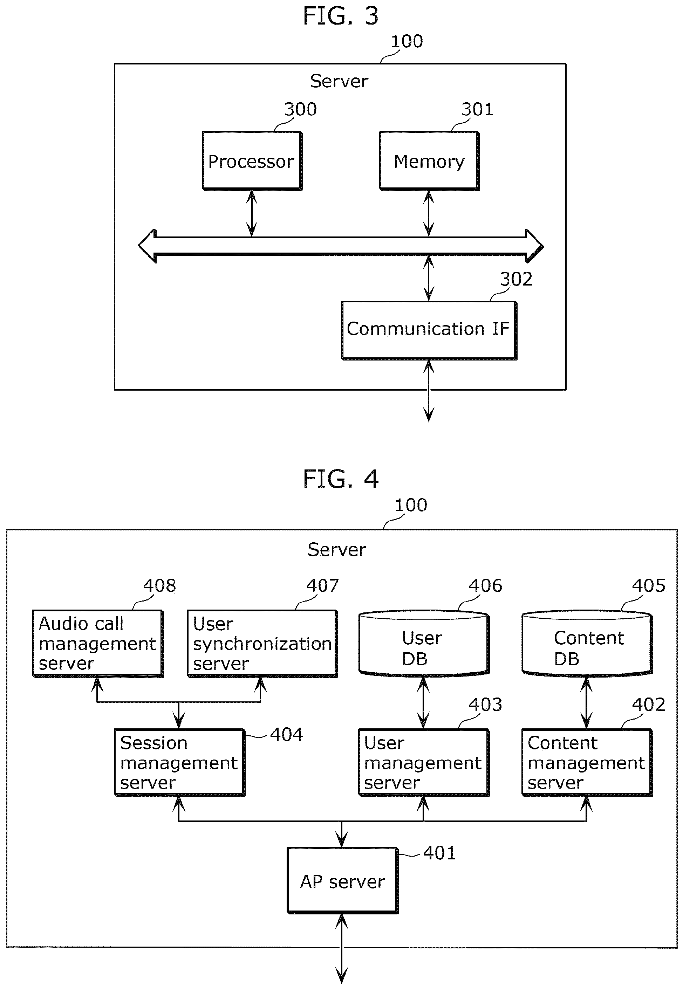

   FIG. 3 is a block diagram illustrating a second configuration example of a server according to the embodiment.
[FIG. 4]
   FIG. 4 is a block diagram illustrating a third configuration example of a server according to the embodiment.
[FIG. 5]

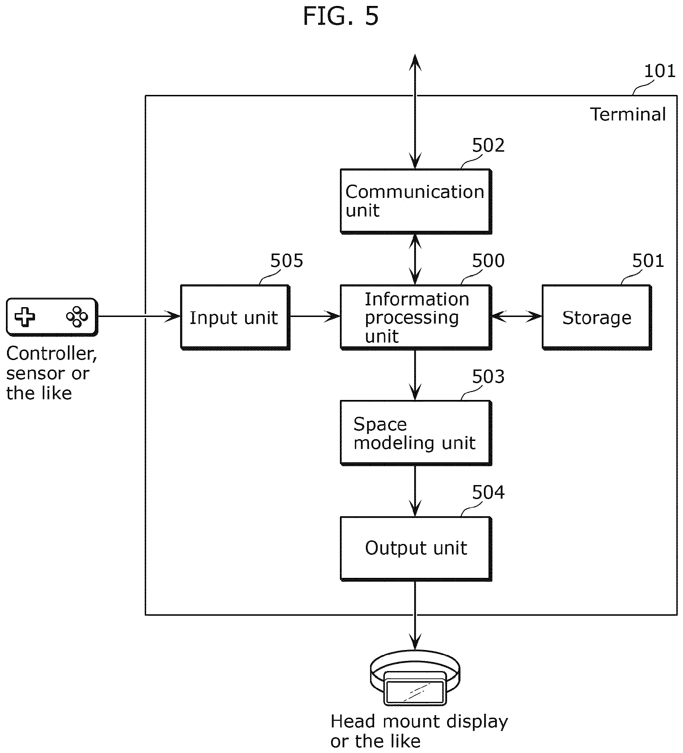

   FIG. 5 is a block diagram illustrating a first configuration example of a terminal according to the embodiment.
[FIG. 6]

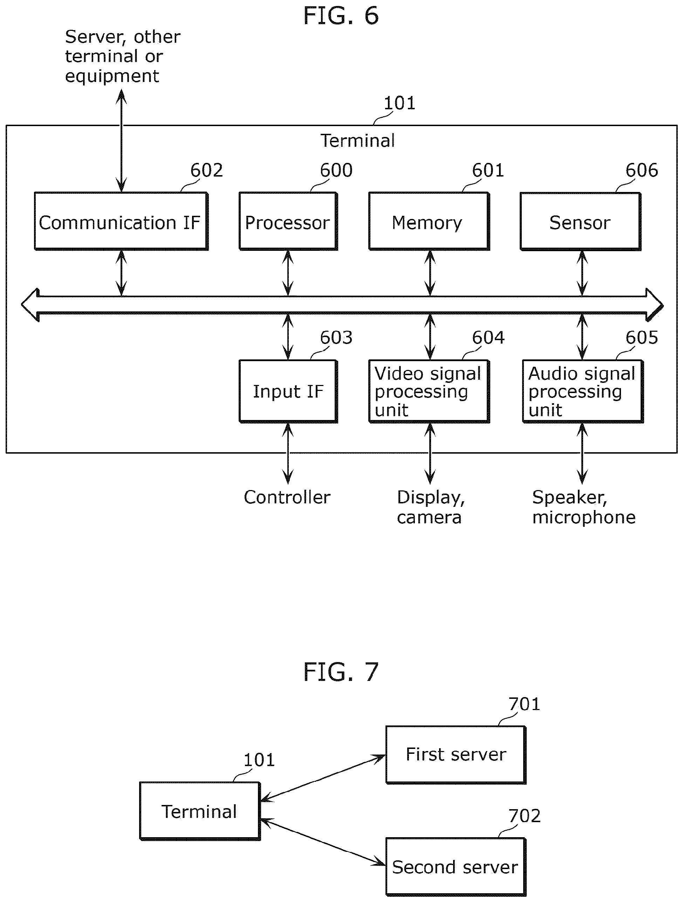

   FIG. 6 is a block diagram illustrating a second configuration example of a terminal according to the embodiment.
[FIG. 7]
   FIG. 7 is a block diagram illustrating a configuration example of a virtual space coordination system according to the embodiment.
[FIG. 8]

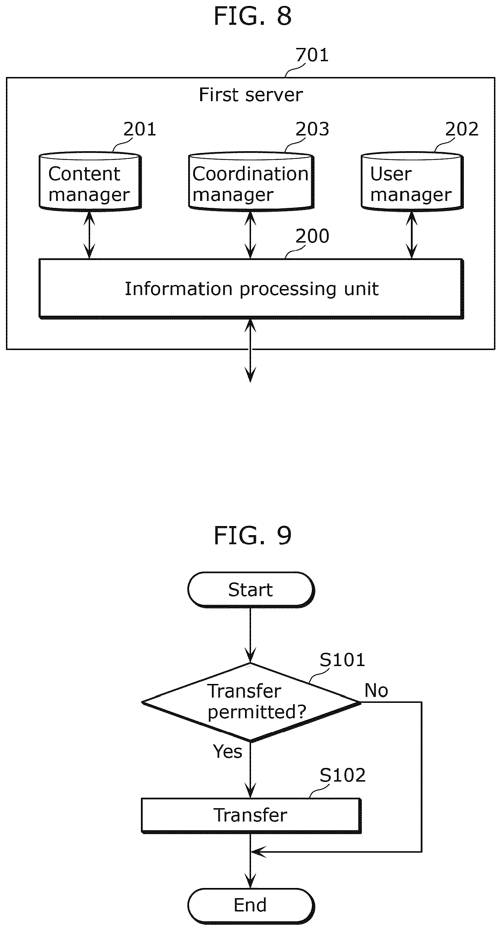

   FIG. 8 is a block diagram illustrating a configuration example of a first server according to the embodiment.
[FIG. 9]
   FIG. 9 is a flowchart illustrating a first transfer control example according to the embodiment.
[FIG. 10]

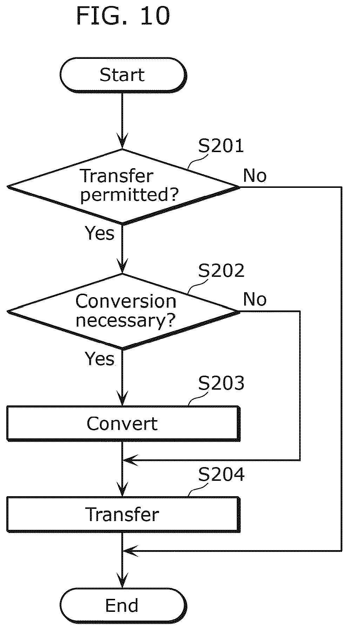

   FIG. 10 is a flowchart illustrating a second transfer control example according to the embodiment.
[FIG. 11]

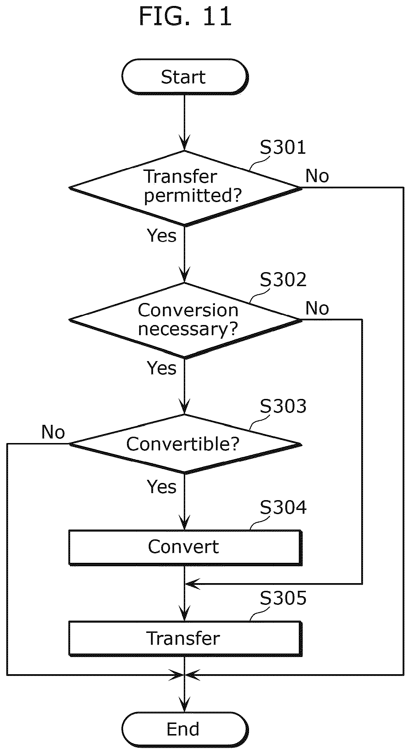

   FIG. 11 is a flowchart illustrating a third transfer control example according to the embodiment.
[FIG. 12]

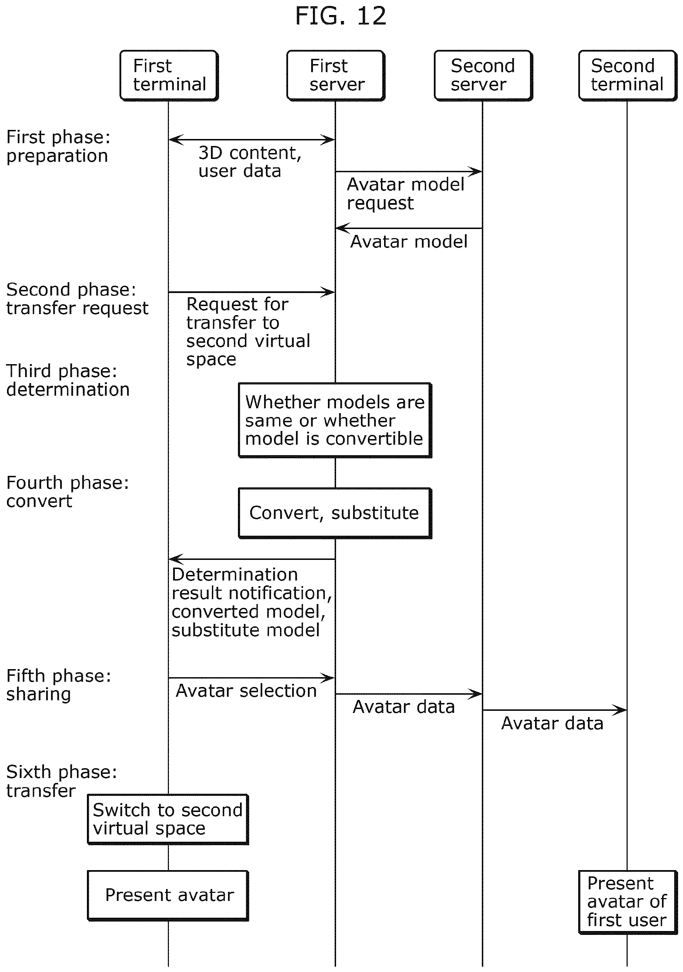

   FIG. 12 is a sequence diagram illustrating a transfer operation according to the embodiment.
[FIG. 13]

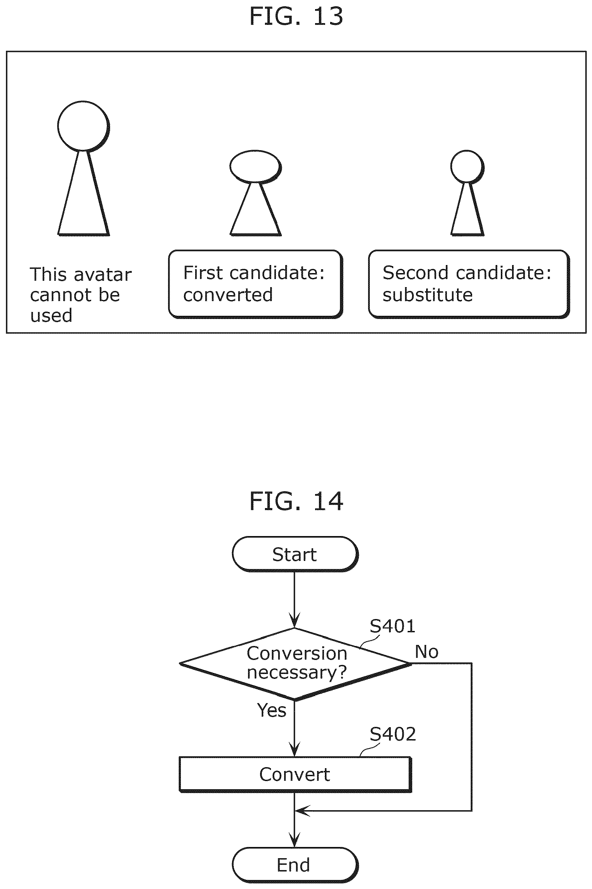

   FIG. 13 is a conceptual diagram illustrating avatar selection according to the embodiment.
[FIG. 14]
   FIG. 14 is a flowchart illustrating first conversion control example according to the embodiment.
[FIG. 15]

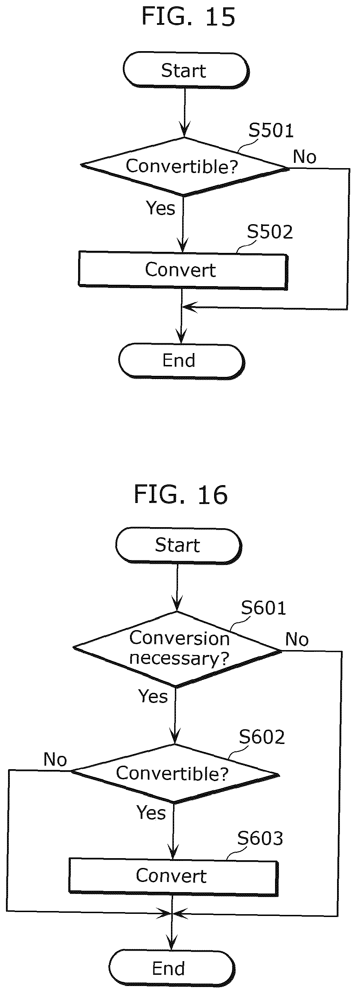

   FIG. 15 is a flowchart illustrating second conversion control example according to the embodiment.
[FIG. 16]
   FIG. 16 is a flowchart illustrating third conversion control example according to the embodiment.
[FIG. 17]

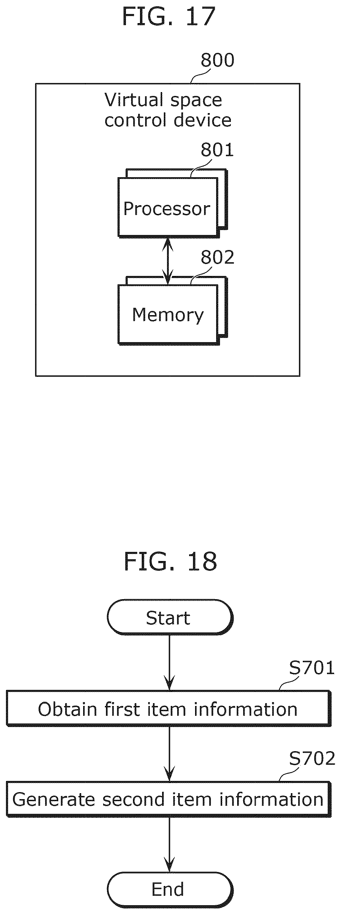

   FIG. 17 is a block diagram illustrating a configuration example of a virtual space control device according to the embodiment.
[FIG. 18]
   FIG. 18 is a flowchart illustrating an example of operation by the virtual space control device according to the embodiment.

### [Description of Embodiments]

### [Introduction]

In recent years, services via a virtual space provided by computer simulation are attracting attention. The virtual space is represented by three-dimensional shape data that indicates a three-dimensional shape of an object, such as a topography in the space or a building placed in the space.

In the virtual space, for example, a user can manipulate an avatar, which is a representation of the user in the virtual space, to search the space, participate in an arbitrary activity, or communicate with another user. Furthermore, the virtual space can be used for simulation of a physical phenomenon that virtually occurs in the virtual space or for control of an appliance or electronic device placed in the real space based on the simulation, for example.

For example, PTL 1 discloses a method of displaying a single character in a plurality of virtual spaces. PTL 1 is based on the premise that the same data on a character can be used in each virtual space, that is, data on a character used in the plurality of virtual spaces is in a common format.

However, in a situation where a plurality of administrators provide a plurality of virtual spaces, for example, the data format of a first virtual space and the data format of a second virtual space may be different, and thus data that is usable in the first virtual space may be unusable in the second virtual space. Therefore, there are cases where transferring of a character object between a plurality of virtual spaces is difficult.

In view of this, a virtual space control method according to Example 1 includes: obtaining first item information on a first item to be displayed in a first virtual space; and generating, based on the first item information, second item information on a second item to be displayed in a second virtual space different from the first virtual space.

Accordingly, it becomes possible to generate second item information on the second item to be displayed on the second virtual space different from the first virtual space, based on the first item information on the first item to be displayed on the first virtual space. Therefore, for example, when an item is to be transferred from the first virtual space to the second virtual space, it becomes possible to convert the item from the first item to the second item. Accordingly, it becomes possible to appropriately control the transferring of an item between a plurality of virtual spaces.

Furthermore, a virtual space control method according to Example 2 is the virtual space control method according to Example 1, in which the first item information may include first model information indicating a first model to be used in displaying the first item, and first attribute information indicating an attribute of the first item, the second item information may include second model information indicating a second model to be used in displaying the second item, and second attribute information indicating an attribute of the second item, and the attribute of the second item may be the same as the attribute of the first item.

Accordingly, it becomes possible to generate second item information for displaying, in the second virtual space, the second item having the same attribute as the first item to be displayed on the first virtual space. Furthermore, it becomes possible to display the first item in the first virtual space by using the first model, and it becomes possible to display the second item in the second virtual space by using the second model. Accordingly, it becomes possible to appropriately control the transferring of an item between a plurality of virtual spaces.

Furthermore, a virtual space control method according to Example 3 is the virtual space control method according to Example 2, in which the second model may be selected from among one or more model candidates that are usable in the second virtual space.

Accordingly, it becomes possible to display the second item in the second virtual space by using the second model selected from among one or more model candidates that are usable in the second virtual space. Specifically, it becomes possible to select the second model to be used in displaying the second item in the second virtual space from among one or more model candidates that are usable in the second virtual space.

Furthermore, a virtual space control method according to Example 4 is the virtual space control method according to any one of Examples 1 to 3, and may include: storing the second item information in association with user information indicating a user that holds the first item in the first virtual space; and reading the second item information, when user participates in the second virtual space in a state in which the user is holding the first item.

Accordingly, it becomes possible to read the second item information, when a user holding the first item in the first virtual space participates in the second virtual space. Therefore, it becomes possible to display the second item in the second virtual space, when the user holds the first item in the first virtual space.

Furthermore, a virtual space control method according to Example 5 is the virtual space control method according to any one of Examples 1 to 4, in which the first virtual space may be provided by a first virtual space system, and the second virtual space may be provided by a second virtual space system different from the first virtual space system.

Accordingly, it becomes possible to generate, based on the first item information to be used in the first virtual space, the second item information to be used by in the second virtual space provided by the second virtual space system different from the first virtual space system providing the first virtual space. Therefore, it becomes possible to appropriately control the transferring of an item between a plurality of virtual spaces provided by a plurality of mutually different virtual space systems.

Furthermore, a virtual space control method according to Example 6 is the virtual space control method according to any one of Examples 1 to 5, in which the second virtual space may be different from the first virtual space in at least one of a display format, an encoding scheme, or a data format.

Accordingly, it becomes possible to generate, based on the first item information on the first item to be displayed in the first virtual space, the second item information on the second item to be displayed in the second virtual space that is different in display format, encoding scheme, or data format from the first virtual space. Therefore, it becomes possible to appropriately control the transferring of an item between a plurality of virtual spaces having mutually different display formats, encoding schemes, or data formats.

Furthermore, a virtual space control method according to Example 7 is the virtual space control method according to any one of Examples 1 to 6, and may include: determining whether transferring of an item from the first virtual space to the second virtual space is permitted; when the transferring of the item from the first virtual space to the second virtual space is determined to be permitted, converting the item from the first item to be displayed in the first virtual space to the second item to be displayed in the second virtual space, and transferring the item converted, from the first virtual space to the second virtual space; and when the transferring of the item from the first virtual space to the second virtual space is determined to be not permitted, skipping the converting of the item, and skipping the transferring of the item.

Accordingly, it becomes possible to appropriately control the converting and the transferring of an item between a plurality of virtual spaces, according to whether the transferring of the item between the plurality of virtual spaces is permitted.

Furthermore, a virtual space control method according to Example 8 is the virtual space control method according to any one of Examples 1 to 6, and may include: determining whether transferring of an item from the first virtual space to the second virtual space is permitted; when the transferring of the item from the first virtual space to the second virtual space is determined to be permitted, determining whether converting the item from the first item to be displayed in the first virtual space to the second item to be displayed in the second virtual space is necessary for the transferring of the item from the first virtual space to the second virtual space; when the converting of the item from the first item to the second item is determined to be necessary, converting the item from the first item to the second item, and transferring the item converted, from the first virtual space to the second virtual space; when the converting of the item from the first item to the second item is determined to be unnecessary, skipping the converting of the item, and transferring the item from the first virtual space to the second virtual space; and when the transferring of the item from the first virtual space to the second virtual space is determined to be not permitted, skipping the converting of the item, and skipping the transferring of the item.

Accordingly, it becomes possible to appropriately control the converting and the transferring of an item between a plurality of virtual spaces, according to whether the transferring of the item between the plurality of virtual spaces is permitted, and whether the converting of the item between the plurality of virtual spaces is necessary.

Furthermore, a virtual space control method according to Example 9 is the virtual space control method according to any one of Examples 1 to 6, and may include: determining whether transferring of an item from the first virtual space to the second virtual space is permitted; when the transferring of the item from the first virtual space to the second virtual space is determined to be permitted, determining whether converting the item from the first item to be displayed in the first virtual space to the second item to be displayed in the second virtual space is necessary for the transferring of the item from the first virtual space to the second virtual space; when the converting of the item from the first item to the second item is determined to be necessary, determining whether the item is convertible from the first item to the second item; when the item is determined to be convertible from the first item to the second item, converting the item from the first item to the second item, and transferring the item converted, from the first virtual space to the second virtual space; when the item is determined to be not convertible from the first item to the second item, skipping the converting of the item, and skipping the transferring of the item; when the converting of the item from the first item to the second item is determined to be unnecessary, skipping the converting of the item, and transferring the item from the first virtual space to the second virtual space; and when the transferring of the item from the first virtual space to the second virtual space is determined to be not permitted, skipping the converting of the item, and skipping the transferring of the item.

Accordingly, it becomes possible to appropriately control the converting and the transferring of an item between a plurality of virtual spaces, according to whether the transferring of the item between the plurality of virtual spaces is permitted, whether the converting of the item is necessary, and whether the item is convertible.

Furthermore, a virtual space control method according to Example 10 is the virtual space control method according to Example 7, and may include: obtaining information on the first item and information on the second item, in which the determining of whether the transferring of the item is permitted may include comparing the information on the first item and the information on the second item.

Accordingly, it becomes possible to determine whether converting of the item from the first item to the second item is permitted, based on the comparison between the information on the first item to be displayed in the first virtual space and the information on the second item to be displayed in the second virtual space.

Furthermore, a virtual space control method according to Example 11 is the virtual space control method according to Example 8, and may include: obtaining information on the first item and information on the second item, in which the determining of whether the converting of the item is necessary may include comparing the information on the first item and the information on the second item.

Accordingly, it becomes possible to determine whether the converting of the item is necessary for transferring the item, based on the comparison between the information on the first item to be displayed in the first virtual space and the information on the second item to be displayed in the second virtual space.

Furthermore, a virtual space control method according to Example 12 is the virtual space control method according to Example 9, and may include: obtaining information on the first item and information on the second item, in which the determining of whether the item is convertible may include comparing the information on the first item and the information on the second item.

Accordingly, it becomes possible to determine whether the item is convertible from the first item to the second item, based on the comparison between the information on the first item to be displayed in the first virtual space and the information on the second item to be displayed on the second virtual space.

Furthermore, a virtual space control method according to Example 13 is the virtual space control method according to any one of Examples 1 to 12, in which the virtual space control method may be performed by at least one of: a server that transmits, to a terminal, virtual space information for displaying the first virtual space or the second virtual space, and the terminal that receives the virtual space information from the server.

Accordingly, it becomes possible for the server and the terminal to appropriately control the transferring of an item between a plurality of virtual spaces.

Furthermore, a virtual space control method according to Example 14 includes: determining whether transferring of an item from a first virtual space to a second virtual space different from the first virtual space is permitted.

Accordingly, it becomes possible to appropriately control the transferring of an item between a plurality of virtual spaces according to the result of determining whether transferring of the item from the first virtual space to the second virtual space is permitted.

Furthermore, a virtual space control method according to Example 15 is the virtual space control method according to Example 14, in which the virtual space control method may be performed by at least one of: a server that transmits, to a terminal, virtual space information for displaying the first virtual space or the second virtual space, and the terminal that receives the virtual space information from the server.

Accordingly, it becomes possible for the server and the terminal to appropriately control the transferring of an item between a plurality of virtual spaces.

Furthermore, a virtual space control method according to Example 16 includes: determining whether converting of an item from a first item to be displayed in a first virtual space to a second item to be displayed in a second virtual space different from the first virtual space is necessary.

Accordingly, it becomes possible to appropriately control the transferring of an item between a plurality of virtual spaces according to the result of determining whether converting of the item from the first item to be displayed in the first virtual space to the second item to be displayed in the second virtual space is necessary.

Furthermore, a virtual space control method according to Example 17 is the virtual space control method according to Example 16, in which the virtual space control method may be performed by at least one of: a server that transmits, to a terminal, virtual space information for displaying the first virtual space or the second virtual space, and the terminal that receives the virtual space information from the server.

Accordingly, it becomes possible for the server and the terminal to appropriately control the transferring of an item between a plurality of virtual spaces.

Furthermore, a virtual space control method according to Example 18 includes: determining whether an item is convertible from a first item to be displayed in a first virtual space to a second item to be displayed in a second virtual space different from the first virtual space.

Accordingly, it becomes possible to appropriately control the transferring of an item between a plurality of virtual spaces according to the result of determining whether the item is convertible from the first item to be displayed in the first virtual space to the second item to be displayed in the second virtual space.

Furthermore, a virtual space control method according to Example 19 is the virtual space control method according to Example 18, in which the virtual space control method may be performed by at least one of: a server that transmits, to a terminal, virtual space information for displaying the first virtual space or the second virtual space, and the terminal that receives the virtual space information from the server.

Accordingly, it becomes possible for the server and the terminal to appropriately control the transferring of the item between a plurality of virtual spaces.

Furthermore, a virtual space control device according to Example 20 includes: one or more processors; and one or more memories that are accessible from the one or more processors, in which, in operation, the one or more processors: obtain first item information on a first item to be displayed in a first virtual space; and generate, based on the first item information, second item information on a second item to be displayed in a second virtual space different from the first virtual space.

Accordingly, the above-described virtual space control method can be implemented by a virtual space control device.

Furthermore, a virtual space control system according to Example 21 includes: one or more processors; and one or more memories that are accessible from the one or more processors, in which, in operation, the one or more processors: obtain first item information on a first item to be displayed in a first virtual space; and generate, based on the first item information, second item information on a second item to be displayed in a second virtual space different from the first virtual space.

Accordingly, the above-described virtual space control method can be implemented by a virtual space control system.

In addition, these general or specific aspects may be implemented as a system, a device, a method, an integrated circuit, a computer program, or a computer-readable recording medium such as a CD-ROM, or may be implemented as any combination of a system, a device, a method, an integrated circuit, a computer program, and a recording medium

### [Embodiment]

Hereinafter, embodiments will be described in detail with reference to the drawings. It should be noted that the same or corresponding components in different figures are given the same reference signs, and overlapping description may be omitted.

Furthermore, each of the aspects described below are generic or specific examples. Numerical values, shapes, components, steps, the processing order of the steps, and so on, indicated in the subsequent aspects are mere examples, and thus are not intended to limit the claims. Furthermore, components that are not described in any aspect indicating the broadest concepts among the aspects are described as optional components. Moreover, the aspects may be combined.

Furthermore, in the subsequent description, information and data may be used interchangeably. Moreover, in the subsequent description, operations performed by a system or a device may be performed by any component included in the system or device.

### [System Configuration Example]

FIG. 1 is a block diagram illustrating a configuration example of a virtual space system according to this embodiment. The virtual space system in FIG. 1 includes server 100 and terminal 101 and provides a virtual space. The virtual space system may be expressed as a virtual space providing system. In the virtual space, a display format, an encoding scheme, a data format and the like are specified. Server 100 and terminal 101 communicate with each other. Although FIG. 1 illustrates only one terminal 101, a plurality of terminals 101 may communicate with server 100. That is, a plurality of users may participate in the virtual space via a plurality of terminals 101 at the same time.

Server 100 is a server device that retains data on the virtual space (virtual space information) and transmits data on the virtual space to terminal 101 in response to a request from terminal 101. Furthermore, server 100 retains user data (user information) on a user using terminal 101 and other users and transmits user data on other users to terminal 101. Server 100 may transmit, to terminal 101, user data on the user using terminal 101 in addition to the user data on other users.

The user data is data associated with a user and includes image data or three-dimensional model data on an avatar representing the user in the virtual space, for example. Furthermore, the user data may include data on an item possessed by the user in the virtual space, attribute data indicating an attribute of the user, and data concerning an action history of the user. Furthermore, the user data may include data indicating a parameter, such as the level, strength, or skill of a character object manipulated by the user in the virtual space of a game.

Note that the avatar representing the user in the virtual space and a character object manipulated by the user in the virtual space can be regarded as examples of items possessed by the user in the virtual space. Furthermore, the avatar representing the user in the virtual space and a character object manipulated by the user in the virtual space may be expressed as the user in the virtual space. Furthermore, when a user identifier (ID) is used to identify a user, the data associated with the user may be data associated with the user ID.

The user data may include not only information used in the virtual space but also personal information that allows identification of the user. However, when the user data includes personal information in addition to the data used in the virtual space, information that is shared with other users and information that is not shared with other users may be separately managed in order that the personal information is not accessed by the other users. Furthermore, the information that is shared with other users may be able to be set by each user.

The user data may directly include a value, a text or other data concerning the user. Furthermore, the user data may include a parameter, an index or the like for identifying data concerning the user. Data concerning the user may be obtained by referring to a preset table or a table externally obtained from another server or the like based on the parameter, index or the like.

For example, the user data may include a storage location of data, such as an address on another server, and may indirectly indicate data via the storage location. In that case, server 100 or terminal 101 obtains a value, a text or other data concerning the user from the storage location specified by the address.

The address is described by a uniform resource identifier (URI), such as uniform resource locator (URL) or uniform resource name (URN). In addition to the address, the user data may include information that indicates the type, format or the like of data obtained from the address. Note that the user data will be described in detail with reference to FIG. 8.

Terminal 101 is a terminal device that receives data on the virtual space (virtual space information) from server 100. Based on the data on the virtual space received from server 100, terminal 101 displays an image of the virtual space on a display device of terminal 101 or a display device connected to terminal 101. Furthermore, terminal 101 obtains input data that corresponds to an input operation from the user and transmits the input data to server 100.

For example, the input data corresponds to movement information on the avatar in the virtual space. Server 100 notifies, of the input data, terminal 101 of each user. Terminal 101 of each user moves the avatar in the virtual space based on a 3D model downloaded in advance and the input data of which terminal 101 is notified by server 100.

Note that server 100 may determine, based on the input data, whether or not the avatar placed in the virtual space has made an action, such as a movement or gesture, and may notify terminal 101 of each user of the determination result about the action, rather than notifying terminal 101 of the input data. In this way, server 100 may move the avatar in the virtual space displayed on terminal 101 of each user. Furthermore, the input data may include text data, audio data, or video data used for communication with other users.

FIG. 2 is a block diagram illustrating a first configuration example of server 100. Server 100 includes information processing unit 200, content manager 201, and user manager 202.

Information processing unit 200 communicates with terminal 101. For example, information processing unit 200 obtains data requested by terminal 101 from content manager 201 or user manager 202, and transmits the data to terminal 101. Furthermore, information processing unit 200 may perform processing requested by terminal 101 on the data received from terminal 101 and transmit the processing result to terminal 101 or store the processing result in content manager 201 or user manager 202.

Furthermore, information processing unit 200 may perform processing requested by terminal 101 on the data obtained from content manager 201 and user manager 202. Information processing unit 200 may then transmit the processing result to terminal 101 or store the processing result in content manager 201 or user manager 202.

Content manager 201 manages content data, which is data concerning a content forming a virtual space. User manager 202 manages user data, which is data concerning a user. The content data and the user data will be described in detail later.

FIG. 3 is a block diagram illustrating a second configuration example of server 100. A plurality of components of server 100 illustrated in FIG. 2 may be implemented by a plurality of components of server 100 illustrated in FIG. 3. In the example in FIG. 3, server 100 includes processor 300, memory 301, and communication interface (IF) 302.

Processor 300 is formed by a central processing unit (CPU), for example. Processor 300 may be formed by a plurality of CPUs or may include a circuit dedicated for particular processing, such as image processing or AI processing, such as a graphics processing unit (GPU).

Memory 301 is formed by a random access memory (RAM) and a read only memory (ROM), for example. Memory 301 may include a magnetic storage medium, such as a hard disk, or a semiconductor memory, such as a solid state drive (SSD). Furthermore, memory 301 may be an internal memory incorporated in a CPU or GPU.

Communication IF 302 is formed by a circuit that provides communication that corresponds to cellular communication, wireless LAN, wired LAN, near-field radio communication or the like, for example. Here, the cellular communication corresponds to long term evolution (LTE (registered trademark)), for example. The wireless LAN corresponds to WiFi (registered trademark) (IEEE 802.11 and revised standards thereof), for example. The wired LAN corresponds to Ethernet (registered trademark), for example. The near field radio communication corresponds to Bluetooth (registered trademark), for example.

Furthermore, communication IF 302 may include an antenna for wireless communication or a terminal to be connected to a cable for wired communication.

Using memory 301, processor 300 of server 100 executes a program stored in memory 301 and performs processing concerning provision of a virtual space.

Communication IF 302 performs wireless communication or wired communication. Specifically, communication IF 302 communicates with terminal 101 over an arbitrary network, such as the Internet or a content distribution network (CDN). Although the Internet and CDN are listed as examples of the network here, other networks may also be used.

For example, when the virtual space is provided in the communication range of a particular access point (AP) or base station that provides wireless communication, the network that connects server 100 and terminal 101 may be only the direct wireless communication with the AP or base station. In that case, server 100 may be included in the AP or base station or may be disposed together with the AP or base station and connected to the AP or base station over wired or wireless communication.

Furthermore, communication IF 302 may use the hypertext transfer protocol (HTTP) to achieve data transmission and reception between server 100 (content providing device) and terminal 101 (content reproducing device), which corresponds to a client. Although the HTTP is listed as a protocol used for communication here, other communication protocols may also be used.

For example, data transmission and reception may be achieved by using the file transfer protocol (FTP), the real-time transport protocol (RTP) or the like.

FIG. 4 is a block diagram illustrating a third configuration example of server 100. Server 100 illustrated in FIG. 2 may be formed by a plurality of servers illustrated in FIG. 4 that operate in coordination with each other.

Specifically, in FIG. 4, server 100 includes application server (AP server) 401, content management server 402, user management server 403, session management server 404, content database (content DB) 405, user database (user DB) 406, user synchronization server 407, and audio call management server 408.

The set of servers illustrated in FIG. 4 is just an example, and each server may have different role or name. For example, one server in FIG. 4 may be formed by a plurality of servers, or a plurality of servers in FIG. 4 may form one server. Furthermore, processing performed by any of the servers in the present disclosure may be performed by another server, instead of the server.

AP server 401 transmits data requested by terminal 101 to terminal 101. Furthermore, AP server 401 may perform processing requested by terminal 101 and transmit the processing result to terminal 101.

Content management server 402 is a server that manages content data concerning a content forming the virtual space. Content DB 405 is a database that stores content data.

Content management server 402 obtains content data from content DB 405 in response to a request notified from terminal 101 via AP server 401, and transmits the content data to terminal 101 via AP server 401. Furthermore, content management server 402 updates content data stored in content DB 405 in response to a request notified from terminal 101 via AP server 401.

Note that in the above description, content management server 402 receives a request notified from terminal 101 via AP server 401. However, content management server 402 may receive a request made by AP server 401. More specifically, content management server 402 may receive a request made by AP server 401 that processes a request notified from terminal 101.

Furthermore, content management server 402 may store, in content DB 405, address information indicating a storage location of content data, rather than storing a part or the whole of content data itself in content DB 405.

User management server 403 is a server that manages user data concerning a user who participate in the virtual space. User DB 406 is a database that stores user data.

User management server 403 obtains user data from user DB 406 in response to a request notified from terminal 101 via AP server 401, and transmits the user data to terminal 101 via AP server 401. Furthermore, user management server 403 updates user data stored in user DB 406 in response to a request notified from terminal 101 via AP server 401.

Note that in the above description, user management server 403 receives a request notified from terminal 101 via AP server 401. However, user management server 403 may receive a request made by AP server 401. More specifically, user management server 403 may receive a request made by AP server 401 that processes a request notified from terminal 101.

Furthermore, user management server 403 may store, in user DB 406, address information indicating a storage location of user data, rather than storing a part or the whole of user data itself in user DB 406.

Session management server 404 manages a session between terminal 101, which corresponds to a client, and server 100. When a plurality of users access the virtual space at the same time, session management server 404 determines from which client, that is, terminal 101 a request has been transmitted, and manages the state of the client. This allows AP server 401 to respond to a request transmitted from the client, that is, terminal 101 in accordance with the state of the client.

When a plurality of users access the virtual space at the same time, user synchronization server 407 maintains the synchronization between the users by managing information concerning an action of each user that has an effect on the position, movement direction, or the like, of the avatar of the user. User synchronization server 407 may achieve the synchronization in units of frames or in units of groups of a plurality of frames.

That is, user synchronization server 407 transmits information on an action of a user to be displayed or more specifically information on an action of a user whose corresponding avatar is located in a display area to terminal 101 and shares the information with terminal 101, thereby reducing discrepancies between actions of users.

When an audio call is established between a plurality of users, audio call management server 408 manages transmission and reception of audio data between the plurality of terminals 101.

Note that the communication between users is not limited to the audio call, and a video call may be used for communication between users. In that case, video data as well as audio data is transmitted and received. Thus, in addition to audio call management server 408, a video call management server that manages a video call may be provided. Alternatively, instead of audio call management server 408, one call management server that manages both an audio call and a video call may be provided.

Furthermore, the communication between users is not limited to a real-time call but may be performed by using an audio file or video file created in advance.

Furthermore, each of the plurality of servers that operates in coordination may have the configuration illustrated in FIG. 3. In that case, for example, communication IF 302 of AP server 401 directly communicates with terminal 101 and communicates with communication IF 302 of each of the other servers, such as content management server 402, user management server 403, and session management server 404.

Although configuration examples of server 100 have been described above with reference to FIGS. 2 to 4, the above description does not mean that all components or all processing mentioned in the above description are not essential for implementing each aspect of the present disclosure.

FIG. 5 is a block diagram illustrating a first configuration example of terminal 101. In the example in FIG. 5, terminal 101 includes information processing unit 500, storage 501, communication unit 502, space modeling unit 503, output unit 504, and input unit 505.

Information processing unit 500 executes application software corresponding to the virtual space provided by server 100 to control storage 501, communication unit 502, space modeling unit 503, output unit 504, and input unit 505.

Storage 501 stores a program of software that is executed by information processing unit 500, data received from server 100, data of a calculation result from information processing unit 500, and input data obtained via input unit 505, for example.

Communication unit 502 communicates with server 100. Space modeling unit 503 performs generation of an image to be displayed as a two-dimensional or three-dimensional virtual space and a sound that is heard in the virtual space based on content data, which is data concerning the virtual space.

Output unit 504 outputs an image and a sound generated by space modeling unit 503 to a display device or a sound output device, thereby presenting the image and the sound via the display device and the sound output device. The display device and the sound output device may be included in terminal 101 or may be connected to terminal 101 by wired or wireless communication. The display device may be a stationary or portable display, a head mount display, or an AR glass. The sound output device may be a speaker, a headphone, or an earphone.

Information processing unit 500 requests server 100 for content data, which is data concerning the virtual space, via communication unit 502 and obtains the content data from server 100. Furthermore, information processing unit 500 transmits input data obtained via input unit 505 to server 100 via communication unit 502. In this process, information processing unit 500 may directly transmit the input data obtained via input unit 505 to server 100, or may perform signal processing on the input data obtained via input unit 505 and transmit the result to server 100.

The processing performed on the input data obtained via input unit 505 may be processing of converting input data that is operation information input via a controller or the like by the user into a command that can be implemented in the virtual space, for example.

The processing performed on the input data may be image processing, such as recognition processing, performed on input data that is image data obtained from a camera. Furthermore, the processing performed on the input data may be processing of performing image processing to generate information indicating a posture or movement of a person in the image or information indicating that a person in the image has made a predetermined gesture.

FIG. 6 is a block diagram illustrating a second configuration example of terminal 101. A plurality of components illustrated in FIG. 5 may be implemented by a plurality of components illustrated in FIG. 6. In FIG. 6, terminal 101 includes processor 600, memory 601, communication IF 602, input IF 603, video signal processing unit 604, audio signal processing unit 605, and sensor 606.

Processor 600 is formed by a central processing unit (CPU), for example. Processor 600 may be formed by a plurality of CPUs or may include a circuit dedicated for particular processing, such as image processing or AI processing, such as a graphics processing unit (GPU).

Memory 601 is formed by a random access memory (RAM) and a read only memory (ROM), for example. Memory 601 may include a magnetic storage medium, such as a hard disk, or a semiconductor memory, such as a solid state drive (SSD). Furthermore, memory 601 may be an internal memory incorporated in a CPU or GPU.

Communication IF 602 is formed by a circuit that provides communication, such as cellular communication, wireless LAN, wired LAN, or near-field radio communication, for example. Here, the cellular communication corresponds to long term evolution (LTE (registered trademark)), for example. The wireless LAN corresponds to WiFi (registered trademark) (IEEE 802.11 and revised standards thereof), for example. The wired LAN corresponds to Ethernet (registered trademark), for example. The near field radio communication corresponds to Bluetooth (registered trademark), for example.

Furthermore, communication IF 602 may include an antenna for wireless communication or a terminal to be connected to a cable for wired communication.

Input IF 603 may include a touch panel and a button provided in terminal 101 or may include a communication IF to a peripheral device that is connected to terminal 101 via wireless communication or wired communication. As the communication IF to the peripheral device, the universal serial bus (USB) may be used, or WiFi or Bluetooth described above may be used. Note that communication IF 602 described above may also be used as the communication IF to a peripheral device.

Using memory 601, processor 600 of terminal 101 executes a program stored in memory 601 and performs processing concerning provision of a virtual space.

Memory 601 stores a program, data or the like. For example, memory 601 may store a program that is executed by processor 600, store data to be processed by processor 600, or data processed by processor 600. Furthermore, memory 601 may store data to be transmitted from communication IF 602, data received by communication IF 602, or data input via input IF 603.

Furthermore, memory 601 may store data to be processed by video signal processing unit 604 or data processed by video signal processing unit 604. Furthermore, memory 601 may store data to be processed by audio signal processing unit 605, data processed by audio signal processing unit 605, or data obtained by sensor 606.

Writing and reading of data to and from memory 601 are performed based on an instruction from processor 600, for example. However, the present disclosure is not limited to this. For example, data received at communication IF 602 may be directly written to memory 601. Furthermore, data to be transmitted from communication IF 602 may be read from memory 601 and directly input to communication IF 602.

Communication IF 602 performs wireless communication or wired communication. Specifically, communication IF 602 communicates with server 100 over an arbitrary network, such as the Internet or a CDN. The method in which communication IF 602 communicates with server 100 is the same as the method in which communication IF 302 of server 100 communicates with terminal 101. Note that communication IF 602 can perform not only communication with server 100 but also communication with equipment used together with terminal 101.

Input IF 603 detects and obtains an operation performed by the user via a touch panel or the like included in terminal 101 as input data. Furthermore, the operation input received by input IF 603 is not limited to the operation input from the user via a device incorporated in terminal 101. For example, input IF 603 may receive an operation input from the user via an external controller or the like connected thereto via wired communication or wireless communication.

Video signal processing unit 604 performs signal processing on a video signal to be displayed on terminal 101 or a video signal obtained with by a camera. The signal processing performed by video signal processing unit 604 includes encoding processing for compressing a video signal and decoding processing for expanding a compressed video signal. Video signal processing unit 604 may output the processing result in the form of an image from a display device included in terminal 101 or a display device connected to terminal 101 via wired communication or wireless communication. Here, the image may be a video.

Audio signal processing unit 605 performs signal processing on an audio signal to be presented by terminal 101 or an audio signal collected by a microphone. The signal processing performed by audio signal processing unit 605 includes encoding processing for compressing an audio signal and decoding processing for expanding a compressed audio signal. Audio signal processing unit 605 may output the processing result in the form of a sound from a sound output device included in terminal 101 or a sound output device connected to terminal 101 via wired communication or wireless communication.

Sensor 606 is a sensor included in terminal 101. Sensor 606 may be formed by one or more of a camera, a light detection and ranging (LiDAR), a microphone, a touch panel, a global positioning system (GPS), an acceleration sensor, a gyro sensor, and a temperature sensor, for example.

Sensing data obtained with sensor 606 may be detected by input IF 603 as an operation by the user or may be transmitted to server 100 as a detection result concerning the surrounding environment of terminal 101.

### [Virtual Space]

The virtual space according to the present disclosure is represented by space data including three-dimensional shape data that indicates a three-dimensional shape of an object, such as a topography in the space or a building placed in the space. The virtual space need not be a three-dimensional space. The virtual space may be a two-dimensional plane. When the virtual space is a two-dimensional plane, space data includes two-dimensional shape data that indicates a region in which the user can move, for example. Furthermore, when the virtual space is a two-dimensional plane, the space data may include image data.

Although data that represents a virtual space is referred to as space data in the above description, other expressions may be used. For example, the data that represents a virtual space may be referred to as map data, topography data, or content data. Furthermore, as described above, the space data may include data on a building placed in the space. Alternatively, the data on a building placed in the space may be managed as object data separated from the space data.

Object data on an object placed in the virtual space may include metadata associated with the object, in addition to the three-dimensional shape data. The metadata indicates an attribute of the object or information specific to the object, for example. For example, the metadata may include information that indicates whether the object placed in the space is a building. Note that although data such as an attribute associated with an object is referred to as metadata here, other expressions may be used.

The virtual space may include not only a visible object, that is, an object displayed on a screen, but also an invisible object, that is, an object that is not displayed on a screen. The invisible object is an object that relates to an arbitrary phenomenon, such as a flow of air or water in the space, and may be an object represented as a vector that indicates the direction and magnitude of a movement or acceleration.

Furthermore, another example of the invisible object may be an object that indicates a characteristic of the space, such as the temperature, the humidity, or the odor of a region of the space, fine particles included in a region of the space, or the kind or concentration of a chemical substance in a region of the space. Data on an invisible object may include three-dimensional shape data or may include position data or region data that indicates the position or region in the virtual space at which the invisible object is located.

The position data indicates coordinate values in the coordinate system of the virtual space. Furthermore, when the virtual space is associated with the real space, the position data may indicate coordinate values in the coordinate system that can represent the position in the real space. The position data may indicate relative position information or rotation information that indicates the correspondence between the coordinate system of the virtual space and the coordinate system of the real space.

Furthermore, when the virtual space is divided into a plurality of unit spaces, the position data may indicate an index value of a relevant unit space. Furthermore, when a position that can be used as a reference position is defined in the virtual space, the position data may indicate the position in the form of the difference from the reference position. Furthermore, the coordinate system that represents positions in the virtual space is not limited to the Cartesian coordinate system. The coordinate system that represents positions in the virtual space may be the polar coordinate system, for example.

The region data includes information that indicates a representative position in a region and information that indicates the size of the region, for example. The representative position of a region may be the position of the center of the region, or when the region has the shape of a rectangular parallelepiped, the representative position of the region may be the position of the vertex whose coordinate values along the three axes are the smallest. However, the representative position of the region is not limited to these positions. Any position inside or outside of the region can be used as the representative position according to the predetermined manner of description of the region.

As the size of the region, for example, the dimensions of the region in the three axial directions of the coordinate system representing the virtual space are used, for example. The dimensions in the three axial directions are values of the height, the width, and the depth of the region, for example. However, the size of the region is not limited to the dimensions in the three axial directions. For example, when the region is represented as a sphere, the value of the diameter or radius of the region may be used. Alternatively, when the region has the shape of an oval sphere, the diameter or radius in the major axis direction of the oval sphere, the diameter or radius in the minor axis direction, and the diameter or radius in the direction perpendicular to both the major axis direction and the minor axis direction may be used.

Furthermore, when a region is defined by a plurality of planes each of which is parallel to any one of the three axes representing the virtual space, the position and size of the region are determined by the minimum value and maximum value of the region on each of the three axes. For example, among the eight vertices of the rectangular parallelepiped representing the region, the coordinate values of the vertex that is the closest to the origin and the coordinate values of the vertex that is the farthest from the origin may determine the position and size of the region. In that case, the coordinate values of one vertex may be used as the representative position described above, and the coordinate values of the other vertex may be used as information that indicates the size of the region.

The virtual space may be formed only by a virtual object generated by an administrator or user of the virtual space.

Alternatively, the virtual space may include a virtual object generated based on data obtained by sensing of the real world with a sensor, such as a camera or light detection and ranging (LiDAR). That is, the virtual space may include a virtual object that is a copy of an object in the real space. Furthermore, all objects in the virtual space may be formed only by virtual objects that correspond to objects in the real space.

The virtual object that corresponds to an object in the real space, that is, the virtual object that is a copy of an object in the real space, is not limited to the virtual object generated based on data obtained by sensing of the real world. For example, a virtual object may be generated based on drawing data or computer-aided design (CAD) data on a building built in the real space or an arbitrary object, such as a statue, device, or equipment placed in the real space.

Furthermore, the virtual object may be generated based on data obtained by performing signal processing on sensing data obtained by sensing of the real world. For example, the signal processing that is performed on sensing data may be extraction processing for selecting only a part of sensing data relating to generation of a virtual object or interpolation processing for sensing data that is discretely obtained.

In the above description, the extraction processing and the interpolation processing are listed as examples of the signal processing. However, the signal processing may be other processing. For example, the signal processing may include estimation processing for an object. Specifically, in the estimation processing, the degree of agreement between sensing data and object candidate data, such as a three-dimensional model or image, registered in a database. Then, an object candidate that corresponds to object candidate data whose degree of agreement is evaluated to be high may be estimated as an object that corresponds to the sensing data.

Furthermore, processing, such as data simplification, meshing, voxelization, or deformation, may be performed on the sensing data or a three-dimensional shape model generated from the sensing data. Furthermore, data on a virtual object may include attribute information, such as color or reflectance, obtained by shooting an object in the real space with a camera or LiDAR, in addition to the shape data generated based on the object in the real space. Furthermore, the attribute information on the virtual object may be generated from the shape of or attribute information on the object in the real space.

The device used for sensing may be a camera, a LiDAR, a wireless transceiver, or an ultrasonic sonar, for example. The virtual object may be generated by combining a plurality of pieces of sensing data obtained from a plurality of sensing devices.

Object data on an object corresponding to the real space may include information indicating the size of the object in the real space. The information indicating the size of the object in the real space may include the value of the size of the object in the real space or the value of the scale ratio between the size of the object in the virtual space and the size of the object in the real space.

FIG. 7 is a diagram illustrating a configuration example of a virtual space coordination system. In the example in FIG. 7, the virtual space coordination system includes terminal 101, first server 701, and second server 702. First server 701 is a server device that provides a first virtual space. Second server 702 is a server device that provides a second virtual space. That is, the virtual space coordination system includes a plurality of virtual space systems and provides a plurality of virtual spaces. Each virtual space system corresponds to the virtual space system illustrated in FIG. 1.

Specifically, the virtual space coordination system includes a first virtual space system that provides the first virtual space and a second virtual space system that provides the second virtual space. First server 701 is a server device in the first virtual space system that provides the first virtual space. Second server 702 is a server device in the second virtual space system that provides the second virtual space.

Terminal 101 is included in both the first virtual space system and the second virtual space system. For example, the first virtual space system and the second virtual space system can operate independently from each other, have different specifications, and are managed by different administrators.

Furthermore, terminal 101 in FIG. 7 corresponds to terminal 101 in FIG. 1 and includes a plurality of components illustrated in FIG. 5 or 6, for example. Furthermore, each of first server 701 and second server 702 in FIG. 7 corresponds to server 100 in FIG. 1 and includes a plurality of components illustrated in any of FIGS. 2 to 4, for example. Each of terminal 101, first server 701, and second server 702 may further include an additional component or perform additional processing.

For example, terminal 101 performs, at communication IF 602, communication with first server 701 that provides the first virtual space and second server 702 that provides the second virtual space. Specifically, terminal 101 communicates with first server 701 when terminal 101 receives a request for operation in the first virtual space from the user. Furthermore, terminal 101 communicates with second server 702 when terminal 101 receives, from the user, a request for transfer from the first virtual space to the second virtual space.

As described above, terminal 101 communicates with first server 701 or second server 702 in response to the communication request from the user. Note that terminal 101 may communicate with first server 701 or second server 702 at an arbitrary timing, rather than in response to the communication request from the user.

Furthermore, the virtual space coordination system may include more servers that provide more virtual spaces. And terminal 101 may communicate with other servers. Furthermore, first server 701, second server 702, and other servers may communicate with each other.

The transferring of a user between a plurality of virtual spaces is achieved by the user changing the virtual space to be participated from the first virtual space to the second virtual space, for example.

Here, the transferring of a user between a plurality of virtual spaces corresponds to a user in the first virtual space being transferred to the second virtual space, for example. That is, the transferring of a user between a plurality of virtual spaces corresponds to an avatar representing the user in the first virtual space or a character object manipulated in the first virtual space by the user being transferred to the second virtual space, for example. That is, the transferring of a user between a plurality of virtual spaces corresponds to the transferring of an item between the plurality of virtual spaces.

In other words, the transferring of a user between a plurality of virtual spaces corresponds to the transferring of the user between a plurality of virtual space systems and corresponds to the transferring of an item between a plurality of virtual space systems.

FIG. 8 is a block diagram illustrating a configuration example of first server 701. Second server 702 may have the same components as those of first server 701.

First server 701 includes information processing unit 200, content manager 201, user manager 202, and coordination manager 203. Information processing unit 200 is connected to content manager 201, user manager 202, and coordination manager 203 and appropriately obtains required data. Note that a method of using data in the case where the user is transferred between virtual spaces will be described later.

A plurality of components illustrated in FIG. 8 may be implemented by a plurality of components illustrated in FIG. 3 or may be implemented by a plurality of components illustrated in FIG. 4. Furthermore, first server 701 may include a coordination management server and a coordination DB that correspond to coordination manager 203, in addition to the plurality of components illustrated in FIG. 4.

### [Content data]

Content data is data concerning a content included in a virtual space. Content data includes one or more of three-dimensional model information, two-dimensional model information, invisibility information and the like. Furthermore, content data corresponds to virtual space information for displaying a virtual space.

### <Three-dimensional model information>

Three-dimensional model information is data concerning a three-dimensional model among contents included in a virtual space. Three-dimensional model information includes one or more of space information, object information, avatar information and the like. Space information is three-dimensional shape data on a background virtual space of a virtual space.

Space information may be shape data from a subjective point of view of a user or shape data from an objective point of view. Space information may include not only three-dimensional shape data but also metadata that indicates an attribute of an object placed in the space or the like.

Object information indicates the shape of an object, such as a topography in the space or a building placed in the space, and is represented by three-dimensional shape data. The object is not limited to a visible object, such as a building, a person other than the user, an animal, or a character, and may be an invisible object. The three-dimensional shape data may be a point cloud or polygon data, such as a mesh.

Avatar information is three-dimensional shape data on an avatar that serves as a proxy for the user who manipulates the avatar. The avatar may correspond to any of a person, an animal, a character and the like, for example.

Note that these pieces of content data may be static data that does not change over time or may be dynamic data that changes over time.

### <Two-dimensional model information>

Two-dimensional model information is data concerning a two-dimensional model among contents included in a virtual space. Two-dimensional model information differs from three-dimensional model information in that the two-dimensional model information includes no depth information. Two-dimensional model information may be any of a static image, a moving image, a 360-degree image and the like, for example. Note that although space information, object information, and avatar information are included in three-dimensional model information in this embodiment, space information, object information, and avatar information may be included in two-dimensional model information.

### <Invisibility information>

Invisibility information includes information on a content that relates to a sense other than the visual sense and additional information that is included neither in the two-dimensional model nor in the three-dimensional model, among contents included in a virtual space. Invisibility information includes text information, audio information, and attribute information, for example.

Attribute information is information that relates to an ability, characteristic or the like of an avatar, for example. The ability is acquired in accordance with an operation, the login duration or the like of the user in the first virtual space. The ability may be referred to as skill or level value. The characteristic may be sex or age of the avatar or an attribute specific to the character, for example.

### [User data]

User data is data that relates to a user who uses a virtual space. One set of user data is set for one user. User data includes one or more of a user identifier, personal information, virtual space item information, spatial movement information and the like, for example.

The user identifier is an identifier of a user registered in each virtual space. In other words, the user identifier is linkage information between a user and an index. Alternatively, a user identifier is possible which can be commonly used in a plurality of virtual spaces that are coordinated with each other.

The personal information is personal information on a user and includes name, age, birth date and the like.

The virtual space item information is set for each virtual space used by a user. Virtual space item information is information that relates to an item used in a virtual space.

Item is a general name of tools used by a user (or avatar or the like) in a virtual space. An avatar may be an example of the item. Items include an object that is somehow available to a user in a virtual space, such as an avatar, an animated avatar, clothes an avatar can wear, an accessory, a belonging, a currency in a virtual space, and other objects. Items may include invisible objects.

Spatial movement information is information that relates to a movement of a user (or an avatar or the like). Movement information includes position information on a user (or an avatar or the like) and animation, a movement, a direction of movement, and a speed of a user (or an avatar or the like) that are obtained in real time, for example.

### [Coordination data]

Coordination data is content data or metadata used for transferring of a user between a plurality of virtual spaces. Coordination data is determined in advance between a plurality of virtual spaces that coordinate with each other, and is defined in a syntax, a description manner, and a format that can be analyzed in each of the plurality of virtual spaces. For example, coordination data includes one or more of a virtual space identifier, a group identifier, a transfer permission level, currency information, a predetermined rule in a virtual space and the like.

The virtual space identifier is an identifier that is assigned in advance to uniquely identify a virtual space that coordinates with another virtual space.

The group identifier is an identifier that is assigned in advance to uniquely identify a group of a plurality of virtual spaces. For example, the group identifier may be used to assign the same identifier to a plurality of virtual spaces with a common rule, currency information or the like.

The transfer permission level is a level that is assigned to each virtual space in terms of compatibility in transferring between a plurality of virtual spaces, for example. It may be prescribed that transferring from a virtual space with a higher level to a virtual space with a lower level is permitted and transferring from a virtual space with a lower level to a virtual space with a higher level is not permitted. For example, a level of 1 is assigned to virtual space A, and a level of 2 is assigned to virtual space B. In this case, a user in virtual space A can be transferred to virtual space B, although a user in virtual space B cannot be transferred to virtual space A.

Note that although a user in virtual space B cannot normally be transferred to virtual space A, if a user was originally in virtual space A and transferred to virtual space B, the user may be able to be transferred back to virtual space A.

The currency information is information that relates to a parameter that is used as a currency in a virtual space. The currency information may include an exchange rate with respect to a reference value common to a plurality of virtual spaces.

The predetermined rule is a rule about transferring between a plurality of virtual spaces, for example. For example, object information or coordinate information for presenting, to a virtual space, an inlet and an outlet for transferring between a plurality of virtual spaces may be prescribed as a predetermined rule.

### [Method of sharing content data]

In the following, a method of sharing content data between a plurality of virtual spaces according to this embodiment will be described. Specifically, an example in which content data in the first virtual space is transferred to the second virtual space will be shown. Note that the method of sharing content data between a plurality of virtual spaces may also be expressed as a method of using content data in a second virtual space.

### [Transferring of item]

First, an overview of processing in which a user is transferred from the first virtual space to the second virtual space will be described. This processing corresponds to processing in which an item possessed by the user in the first virtual space is transferred to the second virtual space. Here, the item is an avatar or a belonging thereto possessed by the user in the virtual space. The item may be an avatar, an animated avatar, clothes an avatar can wear, an accessory, a belonging, a currency in the virtual space, or the like.

The item may be an item that is prepared in advance by the virtual space operator. Furthermore, the item may be generated by combining a plurality of parts selected by the user from among a plurality of selections of a plurality of parts of items prepared in advance by the virtual space operator. Furthermore, the item may be an item generated by the user.

Furthermore, transferring of an item possessed by the user in the first virtual space to the second virtual space can also be expressed as sharing of data on an item possessed by the user in the first virtual space with the second virtual space.

Here, an example in which item data is 3D data including base information and extension information will be considered. Note that the base information may be a point cloud with a sparse density, for example. The extension information may be information for enhancing the density of the point cloud of the base information.

For example, item data is shared between the first virtual space system and the second virtual space system. In this case, based on information on the processing capability of the second virtual space system or the like, whether both the base information and the extension information of the item data will be shared or only the base information will be shared may be switched.

Specifically, when the density of the point cloud the second virtual space system is capable of handling is comparable to the density of the point cloud of the base information, only the base information may be shared. On the other hand, when the second virtual space is capable of processing a point cloud with a density higher than the density of the point cloud of the base information, both the base information and the extension information may be shared. Accordingly, appropriate item data can be shared in accordance with the processing capability of the second virtual space system while reducing the network bandwidth or the like used for the sharing.

Note that when the base information and the extension information of 3D data are prescribed according to a standard or the like, the data to be shared may be switched based on the standard information or the like. For example, when the second virtual space system retains information that indicates whether the second virtual space system can handle the extension information in addition to the base information, whether both the base information and the extension information will be shared can be switched by referring to the information. In this way, the data to be shared can be switched by referring to the standard information or the like retained by the second virtual space system, and appropriate data can be shared while reducing the processing amount.

Furthermore, transferring of an item of a user from the first virtual space to the second virtual space may be sharing of data on the item with another user using the second virtual space so that the item of the user is presented on terminal 101 of the user and terminal 101 of the other user.

Furthermore, information on an item to be presented may be switched in accordance with the processing capability of terminal 101 of the user. For example, item data may be 3D data including base information and extension information. When terminal 101 of the user is capable of displaying the extension information in addition to the base information, the base information and the extension information may be shared with terminal 101 of the user. Otherwise, only the base information may be shared with terminal 101 of the user. In this way, the user can at least see or hear the item data, regardless of the capability of terminal 101 of the user.

Note that processing capability information about terminal 101 of the user may be transmitted to first server 701 or second server 702 in advance. Furthermore, terminal 101 of the user may share base information and extension information. Then, terminal 101 of the user may switch whether to apply the extension information in accordance with the processing capability of terminal 101. In this way, first server 701 or second server 702 need not switch the content of the item data to be shared in accordance with the capability of terminal 101 of the user and can reduce the processing amount.

In transferring, terminal 101 of the user may switch from an application for presenting the first virtual space to an application for presenting the second virtual space to present, in the second virtual space, an item possessed by the user in the first virtual space.

FIG. 9 is a flowchart illustrating a first transfer control example. Specifically, FIG. 9 illustrates control of an operation of transferring an item between a plurality of virtual spaces.

First, the virtual space coordination system determines whether the item can be transferred from the first virtual space to the second virtual space (S101). When it is determined that the transferring is permitted (Yes in S101), the item is transferred from the first virtual space to the second virtual space (S102). When the transferring is not permitted (No in S101), the virtual space coordination system does not transfer the item from the first virtual space to the second virtual space.

FIG. 10 is a flowchart illustrating a second transfer control example. Specifically, FIG. 10 illustrates control of an operation of converting and transferring an item between a plurality of virtual spaces.

First, the virtual space coordination system determines whether the item can be transferred from the first virtual space to the second virtual space (S201). When it is determined that the transferring is not permitted (No in S201), the virtual space coordination system does not transfer the item and ends the process. When it is determined that the transferring is permitted (Yes in S201), the virtual space coordination system determines whether conversion of the item is necessary in order to transfer the item from the first virtual space to the second virtual space (S202).

When it is determined that conversion is necessary (Yes in S202), the virtual space coordination system converts the item (S203). The virtual space coordination system then transfers the item from the first virtual space to the second virtual space (S204). Note that when the user has a property right of the item by the non-fungible token (NFT), the property right of the converted item may be given to the same user by the NFT.

When it is determined that conversion is unnecessary (No in S202), the virtual space coordination system transfers the item from the first virtual space to the second virtual space without conversion (S204).

Note that when the user possesses a plurality of items, the virtual space coordination system performs the process (S202 to S204) described above for each item in a loop manner.

FIG. 11 is a flowchart illustrating a third transfer control example. Specifically, FIG. 11 illustrates another control of the operation of converting and transferring an item between a plurality of virtual spaces.

First, the virtual space coordination system determines whether the item can be transferred from the first virtual space to the second virtual space (S301). When it is determined that the transferring is not permitted (No in S301), the virtual space coordination system does not transfer the item and ends the process. When it is determined that the transferring is permitted (Yes in S301), the virtual space coordination system determines whether conversion of the item is necessary in order to transfer the item from the first virtual space to the second virtual space (S302).

When it is determined that conversion is unnecessary (No in S302), the virtual space coordination system transfers the item from the first virtual space to the second virtual space (S305). When it is determined that conversion is necessary (Yes in S302), the virtual space coordination system determines whether the item is convertible (S303).

When it is determined that the item is convertible (Yes in S303), the virtual space coordination system converts the item (S304). The virtual space coordination system then transfers the item from the first virtual space to the second virtual space (S305). When it is determined that the item is not convertible (No in S303), the virtual space coordination system does not convert the item and does not transfer the item.

Note that when the user possesses a plurality of items, the virtual space coordination system performs the process (S302 to S305) described above for each item in a loop manner.

FIG. 12 is a sequence diagram illustrating a process example in the case where an item is transferred between a plurality of virtual spaces. FIG. 12 illustrates a process performed by first terminal 101, first server 701, second server 702, and second terminal 101 in the case where a first user is transferred from the first virtual space to the second virtual space. In the example in FIG. 12, first terminal 101 is terminal 101 of the first user, and second terminal 101 is terminal 101 of a second user.

In a first phase, preparation for coordination is performed. In order that the first user uses the first virtual space, downloading of a 3D content and an item, user authentication of the first user, and synchronization of user data and the like occur between first terminal 101 and first server 701.

When transferring is permitted between the first virtual space and the second virtual space, first server 701 requests second server 702 for information on the second virtual space and coordination data, and second server 702 transmits the information on the second virtual space and the coordination data to first server 701. The information on the second virtual space is the content data described above, for example, and includes avatar information that indicates an avatar model in the second virtual space, for example.

In a second phase, a transfer request for transferring of the first user to the second virtual space is made. Specifically, the transfer request is made by the first user performing a predetermined operation on an interface of first terminal 101, for example, by an avatar arriving at a predetermined position in the first virtual space.

In a third phase, a determination process concerning transferring of the first user from the first virtual space to the second virtual space is performed. The determination process may be a set of a plurality of determinations.

For example, the determination process may include a transferring permission determination (S101, S201, or S301 described above) based on the coordination data. Furthermore, the determination process may include a determination of whether the item is convertible (such as S303 described above or S501 or S602 described later).

Furthermore, the determination process may include a determination of whether conversion of the item is necessary (such as S202 or S302 described above or S401 or S601 described later). For example, when the model of the item in the first virtual space and the model of the item in the second virtual space are the same, it may be determined that conversion is unnecessary. Furthermore, the determination process may include another determination.

Note that the process from the first phase to the third phase need not be performed in this order, as far as the first phase to the third phase are performed before the conversion process in a fourth phase. For example, based on the transfer request in the second phase, first server 701 may obtain content data required for the determination process in the third phase from second server 702.

In the fourth phase, based on the determination result in the third phase, first server 701 converts the item or substitutes another item for the item as required. Furthermore, first server 701 transmits a determination result notification, such as whether the conversion processing of the item has been successfully performed, to first terminal 101. Furthermore, when the conversion processing has been performed, a converted model resulting from the conversion processing is transmitted, and when the substitution processing has been performed, a substitute model resulting from the substitution processing is transmitted.

In the example in FIG. 12, the item is an avatar, and both the conversion processing and the substitution processing for the avatar are performed. Then, the converted model and the substitute model are transmitted.

First terminal 101 receives the determination result notification. First terminal 101 receives the converted model and displays the converted model as a candidate for an avatar to be used in the second virtual space, when the converted model is transmitted thereto. On the other hand, first terminal 101 receives the substitute model and displays the substitute model as a candidate for an avatar to be used in the second virtual space, when the substitute model is transmitted thereto.

In a fifth phase, when a candidate for an avatar is displayed, first terminal 101 receives, from the first user, a selection of an avatar to be used in the second virtual space. First terminal 101 then notifies first server 701 of the selection of the avatar. When a converted model or substitute model is selected as an avatar to be used in the second virtual space, first server 701 transmits avatar data that indicates the selected converted model or substitute model to second server 702.

When the second user participates in the second virtual space, second server 702 makes second terminal 101 download the avatar data that indicates the converted model or substitute model, in order that the converted model or substitute model is displayed on second terminal 101, which is different from first terminal 101.

In a sixth phase, the first user is transferred from the first virtual space to the second virtual space. In this process, first terminal 101 switches the UI to the second virtual space and presents the selected avatar. When second terminal 101 displays the avatar of the first user, second terminal 101 displays the avatar selected by the first user as the avatar of the first user.

Note that when second terminal 101 skips downloading the converted model or substitute model, second terminal 101 may display an initial avatar as the avatar of the first user. Alternatively, second terminal 101 may notify the second user that the avatar of the first user cannot be displayed.

FIG. 13 is a conceptual diagram illustrating a selection of an avatar. Specifically, in the fourth phase and the fifth phase in FIG. 12, first terminal 101 provides a display for selecting an avatar, as illustrated in FIG. 13. First terminal 101 then receives a selection of an avatar from the first user. Note that although conversion and substitution are separately shown in FIGS. 12 and 13, substitution may be regarded as an example of conversion.

Transmission, reception, and sharing of data between first server 701, second server 702, terminal 101 of the user, and terminal 101 of another user may be implemented by previously defining and executing a command, an API, and a function for performing data request and response.

Furthermore, an example in which first server 701 performs the determination of whether the transferring is permitted, the determination of whether the item is convertible, and the conversion processing is shown here. However, another device, such as second server 702 or a coordination server (not illustrated), may perform the determinations and the like. That is, each processing involved with the transferring may be performed by first server 701, second server 702, or another device, such as a third server or a common server.

### [Examples of determination of whether transferring is permitted]

In the following, the determination of whether the user can be transferred from the first virtual space to the second virtual space (S101, S201, or S301 described above) will be described in detail. As described above, the transferring of the user corresponds to the transferring of an avatar or item of the user.

Furthermore, the determination of whether the user can be transferred from the first virtual space to the second virtual space may be performed at a timing when the user indicates an intention to be transferred from the first virtual space to the second virtual space. For example, at a timing when the user manipulates an avatar or object in the first virtual space to indicate an intention to be transferred to the second virtual space, first server 701 determines whether the user can be transferred. Alternatively, the determination may be performed at a timing determined by the virtual space coordination system, regardless of the intention of the user.

Whether the user can be transferred from the first virtual space to the second virtual space is determined based on the coordinate data. The coordinate data may be shared between first server 701 and second server 702 in advance, or may be shared at a timing when the determination of whether the user can be transferred from the first virtual space to the second virtual space is performed. When there are a plurality of virtual spaces, the coordination data is shared between the plurality of servers that provide the plurality of virtual spaces.

Whether the transferring from the first virtual space to the second virtual space is permitted may be determined regardless of who the user is.

For example, first server 701 refers to the group identifier of the first virtual space and the group identifier of the second virtual space based on the coordination data, and determines whether the transferring is permitted based on whether the group identifier of the second virtual space is the same as the group identifier of the first virtual space. In other words, first server 701 determines that the transferring is permitted when the group identifier of the second virtual space is the same as the group identifier of the first virtual space, and determines that the transferring is not permitted when the group identifier of the second virtual space is not the same as the group identifier of the first virtual space.

Alternatively, first server 701 may refer to the transfer permission level of the first virtual space and the transfer permission level of the second virtual space based on the coordination data, and determine whether the transferring is permitted based on whether the transfer permission level of the second virtual space is equal to or lower than the transfer permission level of the first virtual space. Specifically, first server 701 determines that the transferring is permitted when the transfer permission level of the second virtual space is equal to or lower than the transfer permission level of the first virtual space, and determines that the transferring is not permitted when the transfer permission level of the second virtual space is higher than the transfer permission level of the first virtual space.

Alternatively, whether the user can be transferred from the first virtual space to the second virtual space may be determined based on the user data and the coordination data. For example, whether the user can be transferred from the first virtual space to the second virtual space may be determined based on whether the user identifier of the user has been registered in second server 702. Specifically, it is determined that the transferring is permitted when the user identifier has been registered in second server 702, and it is determined that the transferring is not permitted when the user identifier has not been registered in second server 702.

Alternatively, whether the user can be transferred from the first virtual space to the second virtual space may be determined based on whether the user identifier registered in first server 701 as the user identifier of the user is linked with the user identifier registered in second server 702. Specifically, it is determined that the transferring is permitted when the user identifier in first server 701 is linked with the user identifier in second server 702, and it is determined that the transferring is not permitted when the user identifier in first server 701 is not linked with the user identifier in second server 702.

Alternatively, whether the user can be transferred from the first virtual space to the second virtual space may be determined based on whether a common user identifier has been registered in first server 701 and second server 702 as the user identifier of the user. Specifically, it is determined that the transferring is permitted when a common user identifier has been registered, and it is determined that the transferring is not permitted when no common user identifier has been registered,

When it is determined that the transferring is not permitted, the user may be prompted to perform processing of registering a user identifier in second server 702.

Furthermore, whether the transferring is permitted may be determined based on whether the preparation for use of the second virtual space by the user is completed. For example, the conditions for determination may additionally include that the preparation of an application, a content, and an avatar for presenting the second virtual space is completed. Specifically, it may be determined that the transferring is permitted when the preparation is completed, and it may be determined that the transferring is not permitted when the preparation is not completed. Furthermore, the conditions for determination may additionally include that first terminal 101 has a capability for presenting the second virtual space.

Examples in which first server 701 performs the determination based on the coordination data have been shown above. However, first server 701 may notify second server 702 of the coordination data, and second server 702 may determine whether the user can be transferred. Second server 702 may feed back the determination result to first server 701.

Furthermore, the user may be notified of the result of the determination of whether an item can be transferred from the first virtual space to the second virtual space.

### [Examples of determination of whether conversion is necessary]

In the following, the determination of whether conversion of the item is necessary (S202 and S302 described above and S401 and S601 described later) will be described in detail. The conversion may include substitution.

### <Common ID>

For example, it may be determined that conversion is unnecessary, when the item is authorized in advance as a common item that can be used in a plurality of virtual spaces. For example, a common item that can be used in a plurality of virtual spaces may be assigned a common ID predetermined among the plurality of servers. And whether conversion of the item in user data is necessary may be determined based on whether the item is assigned the common ID.

### <3D shape>

For example, whether presenting the 3D shape of the item in the first virtual space in the second virtual space based on the worldview of the second virtual space or the rule about the object is permitted is determined. For example, a type or presentation level of an item that can be presented in the virtual space may be prescribed for each virtual space. And an item may be assigned an identifier that indicates the type of the item and the presentation level of the item, for example.

Whether the presentation is permitted is determined by comparison between the type or presentation level of the item to be transferred from the first virtual space to the second virtual space and the type or presentation level of the item that can be presented in the second virtual space. For example, when presenting the shape of a gun is permitted in the first virtual space but is not permitted in the second virtual space, it is determined that the item having the shape of a gun cannot be presented in the second virtual space. When it is determined that the item cannot be presented in the second virtual space, it is determined that conversion of the item is necessary for transferring the item.

### <Resolution, frame rate, or size (display format)>

For example, a display format, such as resolution, frame rate, or size, of the item that can be presented or used in the virtual space is prescribed for each virtual space, and whether conversion is necessary is determined based on the display format.

The display format is not limited to the resolution, the frame rate, and the size. When the item is a point cloud, the number or density of points, the number of points in a unit area, the upper or lower limit of the number of types of attributes, or the bit width of attribute data may be defined as the display format. When the item is a mesh, the upper or lower limit of the number of vertices or planes or the bit width of attribute data may be defined.

Alternatively, instead of the resolution, the frame rate, and the size themselves, levels corresponding to the resolution, the frame rate, and the size may be defined in advance for each virtual space, and the resolution, the frame rate, the size or the like may be defined on a level basis. Alternatively, an identifier that indicates the resolution, the frame rate, or the size may be defined for each virtual space.

For example, first server 701 assigns, to the item to be processed, an identifier or level that indicates the resolution, the frame rate, the size or the like of the item. First server 701 then determines whether the presentation is permitted by comparing the level or the like of the resolution, the frame rate, or the size of the item to be transferred from the first virtual space to the second virtual space with the level or the like of the resolution, the frame rate, or the size of the item that can be presented in the second virtual space.

When the presentation is not permitted, it is determined that conversion of the item is necessary for transferring the item. For example, when presentation of a three-dimensional item having a height of up to 30 pixels, a width of up to 30 pixels, and a depth of up to 30 pixels is allowed (permitted) in the second virtual space, it is determined that presentation of an item having a height of 60 pixels, a width of 60 pixels, and a depth of 60 pixels is not allowed (not permitted). When the presentation is not permitted, it is determined that conversion of the item is necessary for transferring the item.

### <Codec (encoding scheme)>

For example, when the three-dimensional data, the two-dimensional data, or the sound forming the item is compressed according to a codec scheme, whether conversion is necessary is determined based on whether the type of the codec scheme is the same in the first virtual space and in the second virtual space.

### <Format (data format)>

For example, whether conversion of the item, that is, conversion of the format or a parameter of the item, is necessary is determined based on whether the format of the data on the item or a parameter in the format is the same in the first virtual space and in the second virtual space. Whether conversion of the item is necessary may be determined based on the type or level of the format.

Note that when the level permitted in the second virtual space is higher than the level permitted in the first virtual space, it may be determined that conversion of the item is unnecessary. Furthermore, whether conversion of the item is necessary may be determined based on whether second server 702 has a capability of presenting the item according to the format or the like of the data in the first virtual space.

### <Others>

Furthermore, among the plurality of determination examples described above, any one determination example may be performed or a plurality of determination examples may be performed in combination. For example, by using one or more of the plurality of determination examples described above, the item can be converted so as to be appropriately processed in the second virtual space.

### [Examples of determination of whether item is convertible]

In the following, the determination of whether the item is convertible (S303 described above and S501 and S602 described later) will be described in detail. When it is determined that conversion is necessary, whether the item is convertible is determined. The conversion may include substitution.

### <Shape>

For example, second server 702 has a conversion list of items that can be presented in the second virtual space and shares the conversion list with another server as coordination data. Specifically, the conversion list may be a table that indicates a correspondence of between item types before and after conversion. For example, the table indicates that an item whose item type is gun can be converted into an item whose item type is water gun.

When it is determined that conversion of the item is necessary, whether the type of the item is included in the table described above is determined. When the type of the item is included in the table, it is determined that the item is convertible. Alternatively, the table may indicate an ID of an item that can be presented in the second virtual space, thereby indicating that the item to be converted can be substituted with a preset item.

### <Resolution, frame rate, or size>

For example, when conversion the display format, such as resolution, frame rate, or size, of the item is necessary, whether the display format of the item can be converted is determined. Specifically, when first server 701 converts the display format of the item, whether the display format can be converted may be determined based on whether first server 701 has a capability of converting the display format of the item.

### <Codec>

For example, when the types of the codec scheme for items in the first virtual space and the second virtual space are different, and conversion of the codec scheme for items is necessary, whether the codec scheme for items can be converted is determined. Specifically, when first server 701 converts the codec scheme for items, whether the codec scheme can be converted may be determined based on whether first server 701 has a capability of performing encoding and decoding according to the codec scheme of the second virtual space.

### < Format>

For example, when conversion of the format of the data on the item or a parameter in the format is necessary, whether the format of the item or the parameter can be converted is determined. Specifically, whether the first virtual space and the second virtual space are compatible in terms of conversion of the format may be determined by comparing an identifier that indicates the type or level of the format of the first virtual space and an identifier that indicates the type or level of the format of the second virtual space. When the first virtual space and the second virtual space are compatible, it may be determined that the conversion is permitted since a conversion rule for the format is prescribed.

By using one or more of the plurality of determination examples described above, the item can be converted so as to be appropriately processed in the second virtual space. Note that first server 701 may perform the determination processing of whether conversion is necessary described above and/or the determination processing of whether the item is convertible and then perform the conversion processing described later based on the result of the determination processing. Alternatively, first server 701 may transmit the determination result to terminal 101, second server 702 or the like, without performing the conversion processing.

### [Examples of item conversion processing]

The item conversion processing is processing of obtaining first item information on a first item that is displayed in the first virtual space and generating, based on the first item information, second item information on a second item that is displayed in the second virtual space. In the following, the item conversion processing will be described in detail. The second item information is generated by converting the first item information. The conversion may include substitution.

### <Shape>

In conversion processing for the shape of the item, an item having a shape of a type specified in a conversion table is generated. First server 701 may automatically convert the original shape according to the shape of the type specified in the conversion table, or may substitute the original shape with a shape selected from among a plurality of item candidates retained in advance by first server 701. In this way, an item having a shape that is difficult to display in the second virtual space becomes able to be displayed through conversion or substitution. When the shape is converted, the other information (such as attribute information) need not be converted and may be used without change.

<Resolution, frame rate, or size>

In conversion processing for the resolution of the item, interpolation or extrapolation of pixels or three-dimensional points, subsampling, point removal, up-conversion for increasing the number of points using filtering, or down-conversion for reducing the number of points is performed. Processing of increasing the frame rate by temporal interpolation of contents may be performed. Alternatively, processing of reducing the frame rate by thinning-out of frames may be performed.

### <Codec>

In conversion processing for the encoding scheme of the item, the item is decoded using the encoding scheme used in the first virtual space, and the item is encoded using the encoding scheme used in the second virtual space.

### < Format>

In conversion processing for the format of the item, according to a conversion rule, a parameter in the format before conversion is converted into a parameter in the format after conversion.

Note that the converted item generated by the conversion processing for the item may be presented to the user, and the user may choose whether to transfer the converted item to the second virtual space. For example, an avatar generated by the conversion processing and an avatar that can originally be used in the second virtual space may be displayed to the user so that the user can choose one of the avatars.

### <Others>

For example, the converted item is shared between first server 701 that provides the first virtual space and second server 702 that provides the second virtual space. If the converted item is downloaded from second server 702 to terminal 101 of another user who uses the second virtual space, the converted item is also displayed on terminal 101 of the other user.

Note that a plurality of conversions may be performed on the item. An item to be used in the destination virtual space may be selected from among a plurality of item candidates resulting from a plurality of conversions.

Note that the conversion processing described above may be used in combination with relevant determination processing of whether conversion is necessary and/or relevant determination processing of whether the item is convertible, or only the conversion processing may be performed.

### [Variations]

The aspects described above mainly show control of transferring and conversion of an item between a plurality of virtual spaces as illustrated in FIGS. 9 to 11. The plurality of variations described below mainly show control of conversion. Note that specific details of the conversions in the variations are the same as those of the conversions described above.

FIG. 14 is a flowchart illustrating a first conversion control example. Specifically, FIG. 14 illustrates a first control example for the operation of converting an item between a plurality of virtual spaces.

First, the virtual space coordination system determines whether conversion of the item is necessary in transferring the item between a plurality of virtual spaces (S401). When it is determined that the conversion is necessary (Yes in S401), the virtual space coordination system converts the item (S402). When it is determined that the conversion is unnecessary (No in S401), the virtual space coordination system does not convert the item.

For example, the virtual space coordination system converts the item determined to require conversion and transfers the item from the first virtual space to the second virtual space, and transfers the item determined to not require conversion from the first virtual space to the second virtual space without conversion.

FIG. 15 is a flowchart illustrating a second conversion control example. Specifically, FIG. 15 illustrates a second control example for the operation of converting an item between a plurality of virtual spaces.

First, the virtual space coordination system determines whether the item is convertible in transferring the item between a plurality of virtual spaces (S501). When it is determined that the item is convertible (Yes in S501), the virtual space coordination system converts the item (S502). When it is determined that the item is not convertible (No in S501), the virtual space coordination system does not convert the item.

For example, the virtual space coordination system converts the item determined to be convertible and transfers the item from the first virtual space to the second virtual space, and neither converts nor transfers the item determined to be not convertible.

FIG. 16 is a flowchart illustrating a third conversion control example. Specifically, FIG. 16 illustrates a third control example for the operation of converting an item between a plurality of virtual spaces.

First, the virtual space coordination system determines whether conversion of the item is necessary in transferring the item between a plurality of virtual spaces (S601). When it is determined that the conversion is unnecessary (No in S601), the virtual space coordination system does not convert the item and ends the process. When it is determined that the conversion is necessary (Yes in S601), the virtual space coordination system determines whether the item is convertible (S602).

When it is determined that the item is convertible (Yes in S602), the virtual space coordination system converts the item (S603). When it is determined that the item is not convertible (No in S602), the virtual space coordination system does not convert the item and ends the process.

For example, the virtual space coordination system transfers the item determined to not require conversion from the first virtual space to the second virtual space without conversion. Furthermore, the virtual space coordination system converts the item determined to require conversion and be convertible and transfers the item from the first virtual space to the second virtual space. Furthermore, the virtual space coordination system neither converts nor transfers the item determined to require conversion and be not convertible.

### [Typical example]

FIG. 17 is a block diagram illustrating a configuration example of the virtual space control device according to this embodiment. Virtual space control device 800 illustrated in FIG. 17 includes one or more processors 801 and one or more memories 802. Virtual space control device 800 may be a single device or may be formed by a plurality of devices. Virtual space control device 800 may be expressed as a virtual space control system.

For example, virtual space control device 800 may be included in the virtual space coordination system or virtual space system described above or may correspond to the virtual space coordination system or virtual space system.

Specifically, virtual space control device 800 may be included in terminal 101, first server 701, or second server 702 illustrated in FIG. 7. Alternatively, virtual space control device 800 may include terminal 101, first server 701, or second server 702. For example, virtual space control device 800 may correspond to a combination of first server 701 and second server 702.

That is, virtual space control device 800 may operate as the virtual space coordination system or virtual space system or may operate as any of the plurality of components included in the virtual space coordination system or virtual space system.

Each of one or more processors 801 is a circuit that performs information processing. For example, processor 801 may correspond to a processor included in any of terminal 101, first server 701, or second server 702.

Here, an operation performed by one or more processors 801 is performed by at least one of one or more processors 801. That is, an operation performed by one or more processor 801 may be performed by one processor 801, performed by a plurality of processors 801 cooperating with each other, or performed by each of a plurality of processors 801.

Each of one or more memories 802 is a volatile or nonvolatile memory that stores information. For example, processor 801 may correspond to a memory included in any of terminal 101, first server 701, and second server 702.

Here, information stored in one or more memories 802 is stored in at least one of one or more memories 802. That is, information stored in one or more memories 802 may be stored in one memory 802, stored in a plurality of memories 802 cooperating with each other, or stored in each of a plurality of memories 802.

One or more processors 801 can access one or more memories 802. That is, at least one processor 801 can access at least one memory 802. One or more processors 801 operate using one or more memories 802. One or more memories 802 store information for operation of one or more processors 801.

Furthermore, one or more memories 802 may store a program for operation of one or more processors 801. Furthermore, one or more memories 802 may store information to be subjected to information processing by one or more processors 801 or information subjected to information processing by one or more processors 801.

FIG. 18 is a flowchart illustrating an operation example of virtual space control device 800. Specifically, one or more processors 801 in virtual space control device 800 perform the operation illustrated in FIG. 18.

In the example in FIG. 18, first, one or more processors 801 obtain first item information on a first item to be displayed in a first virtual space (S701). Then, one or more processors 801 generate, based on the first item information, second item information on a second item to be displayed in a second virtual space different from the first virtual space (S702).

Accordingly, it becomes possible to generate second item information on the second item to be displayed on the second virtual space different from the first virtual space, based on the first item information on the first item to be displayed on the first virtual space. Therefore, for example, when an item is to be transferred from the first virtual space to the second virtual space, it becomes possible to convert the item from the first item to the second item. Accordingly, it becomes possible to appropriately control the transferring of an item between a plurality of virtual spaces.

For example, the first item information may include first model information indicating a first model to be used in displaying the first item, and first attribute information indicating an attribute of the first item. Furthermore, the second item information may include second model information indicating a second model to be used in displaying the second item, and second attribute information indicating an attribute of the second item. In addition, the attribute of the second item may be the same as the attribute of the first item.

Accordingly, it becomes possible to generate second item information for displaying, in the second virtual space, the second item having the same attribute as the first item to be displayed on the first virtual space. Furthermore, it becomes possible to display the first item in the first virtual space by using the first model, and it becomes possible to display the second item in the second virtual space by using the second model. Accordingly, it becomes possible to appropriately control the transferring of an item between a plurality of virtual spaces.

Furthermore, for example, the second model may be selected from among one or more model candidates that are usable in the second virtual space. Accordingly, it becomes possible to display the second item in the second virtual space by using the second model selected from among one or more model candidates that are usable in the second virtual space. Specifically, it becomes possible to select the second model to be used in displaying the second item in the second virtual space from among one or more model candidates that are usable in the second virtual space.

Furthermore, for example, the second item information may be stored in association with user information indicating a user that holds the first item in the first virtual space. In addition, the second item information may be read, when the user participates in the second virtual space in a state in which the user is holding the first item. Accordingly, it becomes possible to read the second item information, when a user holding the first item in the first virtual space joins the second virtual space. Therefore, it becomes possible to display the second item in the second virtual space, when the user holds the first item in the first virtual space.

Furthermore, for example, the first virtual space may be provided by a first virtual space system. In addition, the second virtual space may be provided by a second virtual space system different from the first virtual space system.

Accordingly, it becomes possible to generate, based on the first item information to be used in the first virtual space, the second item information to be used by in the second virtual space provided by the second virtual space system different from the first virtual space system providing the first virtual space. Therefore, it becomes possible to appropriately control the transferring of an item between a plurality of virtual spaces provided by a plurality of mutually different virtual space systems.

Furthermore, for example, the second virtual space may be different from the first virtual space in at least one of a display format, an encoding scheme, or a data format. Accordingly, it becomes possible to generate, based on the first item information on the first item to be displayed in the first virtual space, the second item information on the second item to be displayed in the second virtual space that is different in display format, encoding scheme, or data format from the first virtual space. Therefore, it becomes possible to appropriately control the transferring of an item between a plurality of virtual spaces having mutually different display formats, encoding schemes, or data formats.

Furthermore, for example, one or more processors 801 may determine whether transferring of an item from the first virtual space to the second virtual space is permitted. Then, when the transferring of the item from the first virtual space to the second virtual space is determined to be permitted, one or more processors 801 may convert the item from the first item to be displayed in the first virtual space to the second item to be displayed in the second virtual space. Moreover, in this case, one or more processors 801 may transfer the item converted, from the first virtual space to the second virtual space.

In addition, when the transferring of the item from the first virtual space to the second virtual space is determined to be not permitted, one or more processors 801 may skip the converting of the item. Moreover, in this case, one or more processors 801 may skip the transferring of the item.

Accordingly, it becomes possible to appropriately control the converting and the transferring of an item between a plurality of virtual spaces, according to whether the transferring of the item between the plurality of virtual spaces is permitted.

Furthermore, for example, one or more processors 801 may determine whether transferring of an item from the first virtual space to the second virtual space is permitted.

Then, when the transferring of the item from the first virtual space to the second virtual space is determined to be permitted, one or more processors 801 may determine whether converting is necessary. Specifically, in this case, one or more processors 801 may determine whether converting the item from the first item to be displayed in the first virtual space to the second item to be displayed in the second virtual space is necessary for the transferring of the item from the first virtual space to the second virtual space.

In addition, when the converting of the item from the first item to the second item is determined to be necessary, one or more processors 801 may convert the item from the first item to the second item. Moreover, in this case, one or more processors 801 may transfer the item converted, from the first virtual space to the second virtual space.

On the other hand, when the converting of the item from the first item to the second item is determined to be unnecessary, one or more processors 801 may skip the converting of the item. Moreover, in this case, one or more processors 801 may transfer the item from the first virtual space to the second virtual space.

Furthermore, when the transferring of the item from the first virtual space to the second virtual space is determined to be not permitted, one or more processors 801 may skip the converting of the item. Moreover, in this case, one or more processors 801 may skip the transferring of the item.

Accordingly, it becomes possible to appropriately control the converting and the transferring of an item between a plurality of virtual spaces, according to whether the transferring of the item between the plurality of virtual spaces is permitted, and whether the converting of the item between the plurality of virtual spaces is necessary.

Furthermore, for example, one or more processors 801 may determine whether transferring of an item from the first virtual space to the second virtual space is permitted.

Then, when the transferring of the item from the first virtual space to the second virtual space is determined to be permitted, one or more processors 801 may determine whether converting is necessary. Specifically, in this case, one or more processors 801 may determine whether converting the item from the first item to be displayed in the first virtual space to the second item to be displayed in the second virtual space is necessary for the transferring of the item from the first virtual space to the second virtual space.

In addition, when the converting of the item from the first item to the second item is determined to be necessary, one or more processors 801 may determine whether the item is convertible from the first item to the second item.

Then, when the item is determined to be convertible from the first item to the second item, one or more processors 801 may convert the item from the first item to the second item. Moreover, in this case, one or more processors 801 may transfer the item converted, from the first virtual space to the second virtual space.

On the other hand, when the item is determined to be not convertible from the first item to the second item, one or more processors 801 may skip the converting of the item. Moreover, in this case, one or more processors 801 may skip the transferring of the item.

Furthermore, when the converting of the item from the first item to the second item is determined to be unnecessary, one or more processors 801 may skip the converting of the item. Moreover, in this case, one or more processors 801 may transfer the item from the first virtual space to the second virtual space.

In addition, when the transferring of the item from the first virtual space to the second virtual space is determined to be not permitted, one or more processors 801 may skip the converting of the item. Moreover, one or more processors 801 may skip the transferring of the item.

Accordingly, it becomes possible to appropriately control the converting and the transferring of an item between a plurality of virtual spaces, according to whether the transferring of the item between the plurality of virtual spaces is permitted, whether the converting of the item is necessary, and whether the item is convertible.

Furthermore, for example, one or more processors 801 may obtain information on the first item and information on the second item. Then, in any of the determining described above, one or more processors 801 may compare the information on the first item and the information on the second item. Then, one or more processors 801 may perform any of the determining described above according to the result of the comparison.

Here, the information on the first item and the information on the second item may be the same as or different from the above-described first item information and the above-described second item information. Furthermore, the information on the first item may be information on the first virtual space in which the first item is to be displayed. Furthermore, the information on the second item may be information on the second virtual space in which the second item is to be displayed.

Furthermore, for example, when, as a result of comparing the information on the first item and the information on the second item, the information on the first item and the information on the second item are compatible, one or more processors 801 may obtain an affirmative determination result. Furthermore, when the information on the first item and the information on the second item have a predetermined correspondence relationship, one or more processors 801 may obtain an affirmative determination result.

Furthermore, for example, one or more processors 801 may obtain information on the first item and information on the second item. Then, in the determining of whether the transferring of the item is permitted, one or more processors 801 may compare the information on the first item and the information on the second item.

Accordingly, it becomes possible to determine whether the transferring of the item from the first virtual space to the second virtual space is permitted, based on the comparison between the information on the first item to be displayed in the first virtual space and the information on the second item to be displayed on the second virtual space.

Furthermore, for example, one or more processors 801 may obtain information on the first item and information on the second item. Then, in the determining of whether the converting of the item is necessary, one or more processors 801 may compare the information on the first item and the information on the second item.

Accordingly, it becomes possible to determine whether the converting of the item is necessary for the transferring of the item, based on the comparison between the information on the first item to be displayed in the first virtual space and the information on the second item to be displayed on the second virtual space.

Furthermore, for example, one or more processors 801 may obtain information on the first item and information on the second item. Then, in the determining of whether the item is convertible, one or more processors 801 may compare the information on the first item and the information on the second item.

Accordingly, it becomes possible to determine whether the item is convertible from the first item to the second item, based on the comparison between the information on the first item to be displayed in the first virtual space and the information on the second item to be displayed on the second virtual space.

Furthermore, for example, one or more processors 801 may determine whether transferring of an item from a first virtual space to a second virtual space different from the first virtual space is permitted. Accordingly, it becomes possible to appropriately control the transferring of the item between a plurality of virtual spaces according to the result of determining whether transferring of the item from the first virtual space to the second virtual space is permitted.

Furthermore, for example, one or more processors 801 may determine whether converting of an item from a first item to be displayed in a first virtual space to a second item to be displayed in a second virtual space different from the first virtual space is necessary. Accordingly, it becomes possible to appropriately control the transferring of an item between a plurality of virtual spaces according to the result of determining whether converting of the item from the first item to be displayed in the first virtual space to the second item to be displayed in the second virtual space is necessary.

Furthermore, for example, one or more processors 801 may determine whether an item is convertible from a first item to be displayed in a first virtual space to a second item to be displayed in a second virtual space different from the first virtual space. Accordingly, it becomes possible to appropriately control the transferring of an item between a plurality of virtual spaces according to the result of determining whether the item is convertible from the first item to be displayed in the first virtual space to the second item to be displayed in the second virtual space.

Furthermore, for example, another device different from virtual space control device 800 may perform the transferring of the item or the converting of the item, according to the result of the determining performed by one or more processors 801.

Furthermore, for example, one or more processors 801 may perform the above operations as operations of terminal 101, first server 701, or second server 702.

### [Other examples]

Application software for executing processes related to the terminal and the server in the present disclosure may be provided by a software distribution server. Then, the application software may be installed in the terminal and the server. In addition, the terminal and the server may achieve the roles described in the present disclosure by executing the processes related to the terminal and the server in the present disclosure according to the application software.

It should be noted that the application software may be provided to the terminal and the server via another device by way of the other device connecting to the software distribution server via a network.

It should be noted that aspects such as the system, device, and method are not limited to the foregoing description, and the aspects such as the system, the device, and the method in the foregoing description may be implemented by making modifications to the foregoing description. For example, at least a portion of each of the aspects may be implemented by software, or by dedicated hardware, or a combination of hardware and software.

Furthermore, for example, a program for executing the various processes described in the present disclosure may be stored in advance in a Read Only Memory (ROM). Then the processes may be executed by way of the program being executed by a CPU.

Furthermore, the program for executing the various processes described in the present disclosure may be stored in a computer-readable storage medium. In addition, the program stored in the storage medium may be read from a Random Access Memory (RAM) of the computer. Then, the computer may operate according to the program.

Furthermore, each of the above-described components may typically be implemented as a Large Scale Integration (LSI) which is an integrated circuit. They may take the form of individual chips, or one or more or all of the components may be encapsulated into a single chip. Although the integrated circuit is referred to as the LSI here, the integrated circuit may be referred to as an integrated circuit IC, a system LSI, a super LSI, or an ultra LSI depending on the scale of integration.

Moreover, the method of implementation of the components using an integrated circuit is not limited to application of an LSI. The components may be implemented by a dedicated circuit or a general-purpose processor. A programmable logic device (PLD) or a field programmable gate array (FPGA) that can be programmed after the LSI is manufactured may be used. Alternatively, a reconfigurable processor in which connection and setting of circuit cells in an LSI can be reconfigured may be used.

It should be noted that all or some of the software for executing the method described in the present disclosure may be executed by being obtained by wireless communication or wired communication by at least one of the FPGA or the CPU.

For example, the terminal or the server described in the present disclosure includes at least one of an FPGA or a CPU, and may include a communication interface for obtaining, from the outside, software for causing the at least one of the FPGA or the CPU to operate. In addition, the terminal or the server may include a storage medium for storing the obtained software, and the method described in the present application may be implemented by at least one of the terminal or the server operating based on the stored software.

In addition, when a circuit integration technology that replaces LSIs comes along owing to advances in semiconductor technology or to a separate derivative technology, the components should understandably be integrated using that technology. There can be a possibility of adaptation of biotechnology, for example.

In the present disclosure, terms such as ". . .er(unit)" used to denote the respective components may be substituted by other terms such as ". . . device" or ". . . module".

Furthermore, in the foregoing description, processes executed by a specific component may be executed by another component in place of the specific component. Moreover, the order of processes may be changed or processes may be executed in parallel. Furthermore, ordinal numbers such as first and second used in the description may be interchanged, eliminated, or re-assigned as appropriate. These ordinal numbers may be used for identifying components without necessarily corresponding to any meaningful order.

Furthermore, for example, expressions such as at least one (or one or more) of a first component, a second component, or a third component corresponds to the first component, the second component, the third component, or any combination thereof.

Moreover, the respective components may be implemented as dedicated hardware or may be realized by executing a software program suited to the respective components. The respective components may be implemented by a program executor such as a CPU or a processor reading out and executing the software program recorded on a recording medium such as a hard disk or a semiconductor memory.

For example, the above-described program may cause a computer to execute a virtual space control method including: obtaining first item information on a first item to be displayed in a first virtual space; and generating, based on the first item information, second item information on a second item to be displayed in a second virtual space different from the first virtual space

Alternatively, the above-described program may cause a computer to execute a virtual space control method including: determining whether transferring of an item from a first virtual space to a second virtual space different from the first virtual space is permitted.

Alternatively, the above-described program may cause a computer to execute a virtual space control method including: determining whether converting of an item from a first item to be displayed in a first virtual space to a second item to be displayed in a second virtual space different from the first virtual space is necessary.

Alternatively, the above-described program may cause a computer to execute a virtual space control method including: determining whether an item is convertible from a first item to be displayed in a first virtual space to a second item to be displayed in a second virtual space different from the first virtual space.

Although a device, and so on, according to one or more aspects has been described above based on exemplary embodiments, the aspects of the device, and so on, are not limited to the foregoing embodiments. So long as they do not depart from the essence of the present disclosure, various modifications to the embodiments that can be conceived by those skilled in the art may be implemented, and different aspects may be combined.

### [Industrial Applicability]

The present disclosure can be applied to any one or more of a server, a terminal, a communication device, a sensor device, a household appliance, or an electronic device.

### [Reference Signs List]

100 server
101 terminal
200, 500 information processing unit
201 content manager
202 user manager
203 coordination manager
300, 600, 801 processor
301, 601, 802 memory
302, 602 communication IF
401 AP server
402 content management server
403 user management server
404 session management server
405 content DB
406 user DB
407 user synchronization server
408 audio call management server
501 storage
502 communication unit
503 space modeling unit
504 output unit
505 input unit
603 input IF
604 video signal processing unit
605 audio signal processing unit
606 sensor
701 first server
702 second server
800 virtual space control device

## Claims

1. A virtual space control method comprising:
obtaining first item information on a first item to be displayed in a first virtual space; and
generating, based on the first item information, second item information on a second item to be displayed in a second virtual space different from the first virtual space.

2. The virtual space control method according to claim 1, wherein
the first item information includes first model information indicating a first model to be used in displaying the first item, and first attribute information indicating an attribute of the first item,
the second item information includes second model information indicating a second model to be used in displaying the second item, and second attribute information indicating an attribute of the second item, and
the attribute of the second item is same as the attribute of the first item.

3. The virtual space control method according to claim 2, wherein
the second model is selected from among one or more model candidates that are usable in the second virtual space.

4. The virtual space control method according to any one of claims 1 to 3, comprising:
storing the second item information in association with user information indicating a user that holds the first item in the first virtual space; and
reading the second item information, when the user participates in the second virtual space in a state in which the user is holding the first item.

5. The virtual space control method according to any one of claims 1 to 3, wherein
the first virtual space is provided by a first virtual space system, and
the second virtual space is provided by a second virtual space system different from the first virtual space system.

6. The virtual space control method according to any one of claims 1 to 3, wherein
the second virtual space is different from the first virtual space in at least one of a display format, an encoding scheme, or a data format.

7. The virtual space control method according to any one of claims 1 to 3, comprising:
determining whether transferring of an item from the first virtual space to the second virtual space is permitted;
when the transferring of the item from the first virtual space to the second virtual space is determined to be permitted, converting the item from the first item to be displayed in the first virtual space to the second item to be displayed in the second virtual space, and transferring the item converted, from the first virtual space to the second virtual space; and
when the transferring of the item from the first virtual space to the second virtual space is determined to be not permitted, skipping the converting of the item, and skipping the transferring of the item.

8. The virtual space control method according to any one of claims 1 to 3, comprising:
determining whether transferring of an item from the first virtual space to the second virtual space is permitted;
when the transferring of the item from the first virtual space to the second virtual space is determined to be permitted, determining whether converting the item from the first item to be displayed in the first virtual space to the second item to be displayed in the second virtual space is necessary for the transferring of the item from the first virtual space to the second virtual space;
when the converting of the item from the first item to the second item is determined to be necessary, converting the item from the first item to the second item, and transferring the item converted, from the first virtual space to the second virtual space;
when the converting of the item from the first item to the second item is determined to be unnecessary, skipping the converting of the item, and transferring the item from the first virtual space to the second virtual space; and
when the transferring of the item from the first virtual space to the second virtual space is determined to be not permitted, skipping the converting of the item, and skipping the transferring of the item.

9. The virtual space control method according to any one of claims 1 to 3, comprising:
determining whether transferring of an item from the first virtual space to the second virtual space is permitted;
when the transferring of the item from the first virtual space to the second virtual space is determined to be permitted, determining whether converting the item from the first item to be displayed in the first virtual space to the second item to be displayed in the second virtual space is necessary for the transferring of the item from the first virtual space to the second virtual space;
when the converting of the item from the first item to the second item is determined to be necessary, determining whether the item is convertible from the first item to the second item;
when the item is determined to be convertible from the first item to the second item, converting the item from the first item to the second item, and transferring the item converted, from the first virtual space to the second virtual space;
when the item is determined to be not convertible from the first item to the second item, skipping the converting of the item, and skipping the transferring of the item;
when the converting of the item from the first item to the second item is determined to be unnecessary, skipping the converting of the item, and transferring the item from the first virtual space to the second virtual space; and
when the transferring of the item from the first virtual space to the second virtual space is determined to be not permitted, skipping the converting of the item, and skipping the transferring of the item.

10. The virtual space control method according to claim 7, comprising:
obtaining information on the first item and information on the second item, wherein
the determining of whether the transferring of the item is permitted includes comparing the information on the first item and the information on the second item.

11. The virtual space control method according to claim 8, comprising:
obtaining information on the first item and information on the second item, wherein
the determining of whether the converting of the item is necessary includes comparing the information on the first item and the information on the second item.

12. The virtual space control method according to claim 9, comprising:
obtaining information on the first item and information on the second item, wherein
the determining of whether the item is convertible includes comparing the information on the first item and the information on the second item.

13. The virtual space control method according to any one of claims 1 to 3, wherein
the virtual space control method is performed by at least one of:
a server that transmits, to a terminal, virtual space information for displaying the first virtual space or the second virtual space, and
the terminal that receives the virtual space information from the server.

14. A virtual space control method comprising:
determining whether transferring of an item from a first virtual space to a second virtual space different from the first virtual space is permitted.

15. The virtual space control method according to claim 14, wherein
the virtual space control method is performed by at least one of:
a server that transmits, to a terminal, virtual space information for displaying the first virtual space or the second virtual space, and
the terminal that receives the virtual space information from the server.

16. A virtual space control method comprising:
determining whether converting of an item from a first item to be displayed in a first virtual space to a second item to be displayed in a second virtual space different from the first virtual space is necessary.

17. The virtual space control method according to claim 16, wherein
the virtual space control method is performed by at least one of:
a server that transmits, to a terminal, virtual space information for displaying the first virtual space or the second virtual space, and
the terminal that receives the virtual space information from the server.

18. A virtual space control method comprising:
determining whether an item is convertible from a first item to be displayed in a first virtual space to a second item to be displayed in a second virtual space different from the first virtual space.

19. The virtual space control method according to claim 18, wherein
the virtual space control method is performed by at least one of:
a server that transmits, to a terminal, virtual space information for displaying the first virtual space or the second virtual space, and
the terminal that receives the virtual space information from the server.

20. A virtual space control device comprising:
one or more processors; and
one or more memories that are accessible from the one or more processors, wherein
in operation, the one or more processors:
obtain first item information on a first item to be displayed in a first virtual space; and
generate, based on the first item information, second item information on a second item to be displayed in a second virtual space different from the first virtual space.

21. A virtual space control system comprising:
one or more processors; and
one or more memories that are accessible from the one or more processors, wherein
in operation, the one or more processors:
obtain first item information on a first item to be displayed in a first virtual space; and
generate, based on the first item information, second item information on a second item to be displayed in a second virtual space different from the first virtual space.
